(19) Europäisches Patentamt
European Patent Office
Office européen des brevets

(11) **EP 3 065 895 B1**

(12) # EUROPÄISCHE PATENTSCHRIFT

(45) Veröffentlichungstag und Bekanntmachung des Hinweises auf die Patenterteilung:
**11.11.2020  Patentblatt 2020/46**

(21) Anmeldenummer: **14802063.9**

(22) Anmeldetag: **21.11.2014**

(51) Int Cl.:
**B21J 15/02** *(2006.01)*     **B23K 11/06** *(2006.01)*
**B21J 15/36** *(2006.01)*

(86) Internationale Anmeldenummer:
**PCT/EP2014/075328**

(87) Internationale Veröffentlichungsnummer:
**WO 2015/078794 (04.06.2015 Gazette 2015/22)**

(54) **SCHWEISSHILFSFÜGETEIL, MATRIZE ZUM SETZEN DES SCHWEISSHILFSFÜGETEILS, VERBINDUNGSVERFAHREN FÜR DAS SCHWEISSHILFSFÜGETEIL**

WELDING AUXILIARY JOINING PART, MATRIX FOR PLACING THE WELDING AUXILIARY JOINING PART, CONNECTION METHOD FOR THE WELDING AUXILIARY JOINING PART

PIÈCE DE JONCTION D'AIDE AU SOUDAGE, MATRICE POUR LA POSER, PROCÉDÉ POUR L'ASSEMBLER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.11.2013   DE 102013020082**

(43) Veröffentlichungstag der Anmeldung:
**14.09.2016   Patentblatt 2016/37**

(73) Patentinhaber: **Böllhoff Verbindungstechnik GmbH**
**33649 Bielefeld (DE)**

(72) Erfinder:
• **HARTWIG-BIGLAU, Sergej**
**32120 Hiddenhausen (DE)**
• **DRAHT, Torsten**
**33758 Schloss Holte-Stukenbrock (DE)**

(74) Vertreter: **HWP Intellectual Property**
**Ridlerstraße 35**
**80339 München (DE)**

(56) Entgegenhaltungen:
**EP-A1- 2 606 993         EP-A1- 2 631 022**
**EP-A2- 1 078 701         WO-A1-2012/095103**
**WO-A1-2014/210278        DE-A1-102010 013 089**
**DE-B- 1 099 663          JP-A- H09 150 815**
**JP-A- 2007 118 047       JP-A- 2008 080 394**
**US-A1- 2008 081 499**

• **Deutsches Kupferinstitut: "CuCr1Zr", Werkstoff-datenblatt, 23. August 2006 (2006-08-23), Seiten 1-9, XP055193999, Gefunden im Internet: URL:https://www.kupferinstitut.de/fileadmin/user_upload/kupferinstitut.de/de/Documents/Shop/Verlag/Downloads/Werkstoffe/Datenblaetter/Niedriglegierte/CuCr1Zr.pdf [gefunden am 2015-06-05]**
• **Grit Mayer ET AL: "Schweißen von Kupfer und Kupferlegierungen", Deutsches Kupferinstitut - Informationsdruck i.12, 22. Oktober 2010 (2010-10-22), Seiten 1-47, XP055194002, Düsseldorf Gefunden im Internet: URL:http://www.copperalliance.de/docs/librariesprovider3/i012-mit-info-deutsches-kupferinstitut-pdf.pdf?Status=Master&sfvrsn=0 [gefunden am 2015-06-05]**

**Beschreibung**

1. Gebiet der Erfindung

Die vorliegende Erfindung betrifft ein Schweißhilfsfügeteil zum Setzen in mindestens ein erstes Bauteil in Kombination mit einer Matrize und zum nachfolgenden Verschweißen mit mindestens einem zweiten Bauteil, eine Matrize zum Setzen des Schweißhilfsfügeteils, ein Verbindungsverfahren für das Schweißhilfsfügeteil in Kombination mit der Matrize als Gegenlager.

2. Hintergrund der Erfindung

Im Stand der Technik sind unterschiedliche Schweißhilfsfügeteile bekannt. Häufig in Abhängigkeit von den Setzverfahren und den nachfolgenden Schweißverfahren und in Abhängigkeit von den miteinander zu verbindenden Materialien variiert die Form der bekannten Schweißhilfsfügeteile.

In DE 10 2010 020 569 wird in ein Bauteil aus nichtschweißbarem Material ein Schweißhilfsfügeteil eingepresst. Dieses Schweißhilfsfügeteil ist beidseitig abgeflacht, um auf diese Weise den Aufschluss einer Schweißelektrode zu erleichtern. Beim Einpressen oder Einstanzen des Schweißhilfsfügeteils muss ein erzeugter Materialbutzen abgeführt werden, wodurch ein vermeidbarer Verfahrensaufwand entsteht. Aufgrund dieses Verfahrensablaufs wird auch die Kombination des Setzverfahrens des Schweißhilfsfügeteils mit dem nachfolgenden Schweißverfahren erschwert.

Eine ähnliche Befestigung eines Schweißhilfsfügeteils offenbart DE 100 15 713 A1. Hier wird ein Niet eingebracht, der eine T-Form oder eine Doppel-T-Form nach dem Setzen aufweist. Die hier gesetzten Schweißhilfsfügeteile liefern vorteilhafte Kontaktpunkte beispielsweise zum Widerstandsschweißen, erfordern aber gleichzeitig ein aufwendiges Befestigen des Schweißhilfsfügeteils und Abführen eines Abfallbutzens während des Setzverfahrens.

In DE 100 60 390 A1 findet ein bekanntes Stanznietverfahren statt, wobei Stempel und Matrize auch als Schweißelektroden wirken. Der über den Stanzniet fließende elektrische Strom dient einerseits der Erwärmung der Bauteile zur Unterstützung des Fügevorgangs. Andererseits wird der elektrische Strom soweit erhöht, dass auch eine Schweißverbindung zwischen dem Stanzniet und dem Bauteil aus schweißbarem Material herstellbar ist.

In DE 10 2004 025 492 wird ebenfalls ein bekanntes Setzverfahren eingesetzt, in dem Stempel und Matrize gleichzeitig Elektroden für das Widerstandsschweißen bilden. Da ein erstes Bauteil aus nichtschweißbarem Material mit einem zweiten Bauteil aus schweißbarem Material verbunden werden soll, beginnt das Schweißen frühestens mit dem Kontakt zwischen dem Schweißhilfsfügeteil und dem zweiten Bauteil. Da das Schweißhilfsfügeteil vergleichsweise langsam in die Bauteile eingepresst wird, findet das Schweißen unter kombinierten elektrischen und mechanischen Belastungen der Bauteile statt. Es wird somit ein kombiniertes Setz-Schweißverfahren genutzt, bei dem bereits durch das Setzverfahren allein eine Verbindung zwischen dem ersten und zweiten Bauteil hergestellt wird. Dies setzt voraus, dass die zu verbindenden Bauteile auch immer gemeinsam zwischen dem Stempel und der Matrize positioniert werden. Somit ist beispielsweise ein Ausstatten des ersten Bauteils mit dem Schweißhilfsfügeteil vorgelagert zum Schweißverfahren nicht möglich. Zudem weisen die Schweißhilfsfügeteile des hier beschriebenen Verfahrens unterschiedliche Schneid- und Spitzengeometrien auf. Je nach Schneid- oder Spitzengeometrie sowie Anzahl der an einem Schweißhilfsfügeteil vorhandenen Spitzen bilden sich unterschiedliche Schweißzonen heraus. Diese beeinflussen die Art und den Umfang der Schweißverbindung zwischen Schweißhilfsfügeteil und zweitem Bauteil.

DE 10 2007 036 416 beschreibt ein Schweißhilfsfügeteil nach Art eines Nagels. Mithilfe der Spitze des Schweißhilfsfügeteils kann es in ein Aluminiumblech gesetzt werden, sodass nachfolgend die Spitze des Schweißhilfsfügeteils als Schweißwarze oder Schweißbuckel beim Widerstandsschweißen genutzt werden kann. Die Spitze hat jedoch den Nachteil, dass zunächst nur ein punktuell auf die Spitze des Schweißhilfsfügeteils begrenzter Bereich zur Ausbildung einer Schweißzone von einem elektrischen Schweißstrom durchflossen wird. Erst mit dem stückweise Aufschmelzen der Spitze vergrößert sich die Schweißzone und somit der Verbindungsbereich zwischen dem Schweißhilfsfügeteil und dem zweiten Bauteil. Dieser Vorgang ist zeitintensiv und wirkt sich negativ auf die Gesamtzeit zur Herstellung der Verbindung aus.

In DE 10 2012 018 866 werden Bolzen mithilfe von kombinierten mechanischen und thermischen Lasten in zumindest ein erstes Bauteil aus schlecht-schweißbarem Material gesetzt. Dabei bewirken die thermischen Lasten, beispielsweise erzeugt durch einen Stromfluss im Bolzen, den Setzvorgang. In Kombination oder nachfolgend erfolgt ein Verschweißen des gesetzten Bolzens mit einem zweiten Bauteil bestehend aus schweißbarem Material. Zur Vorbereitung des Verschweißens wird die Spitze des Bolzens am Amboss deformiert.

In DE 10 2012 010 870 ist ein zweistufiges Verbindungsverfahren mithilfe eines Bolzens beschrieben. Zunächst wird der Bolzen in ein erstes Bauteil gesetzt und an einem Amboss oder einer Matrize gestaucht. Die damit verbundene Verformung der Bolzenspitze dient der Vorbereitung des nachfolgenden Verschweißens des deformierten Bolzens mit einem Bauteil aus schweißbarem Material. Dabei wird die Bolzenspitze an Matrizen unterschiedlicher Form verformt, um einen Schweißkopf angepasst an das nachfolgende Schweißverfahren zu erzeugen. Als nachteilig hat sich in diesem Zusammenhang gezeigt, dass das Material des ersten Bauteils beim Setzen des Bolzens in das erste Bauteil nicht vollständig aus dem deformierten Spitzenbereich des Bolzens verdrängt wird. Dies kann zu negativen Effekten beim späteren Schweißen führen, da das Material des ersten Bauteils schlecht-schweißbar ist und das Herstellen einer Schweißverbindung behindert.

In DE 10 99 663 B, DE 10 2010 013089 A1 und WO2011/141039 A1 werden Schweißniete offenbart. In JP 2008 080394 A, JP H09 150815, US 2008/081499 A1, WO 2012/095103 werden Schweißelektroden offenbart. In EP 2 606 993 A1, EP 1 078 701 A2, EP 2 631 022 A1 werden Matrizen offenbart.

Es ist daher die Aufgabe vorliegender Erfindung, das vorgeschaltete Setzverfahren eines Schweißhilfsfügeteils im Vergleich zum Stand der Technik zu optimieren, um Nachteile beim nachfolgenden Schweißverfahren zu reduzieren.

3. Zusammenfassung der Erfindung

Die obige Aufgabe wird durch ein Schweißhilfsfügeteil gemäß den unabhängigen Patentansprüchen 1 und 2, eine Matrize gemäß den unabhängigen Patenansprüchen 6, 10 und 12 sowie durch Verbindungsverfahren für ein Schweißhilfsfügeteil gemäß den unabhängigen Patentansprüchen 13, 16, 20 und 22 gelöst. Bevorzugte Ausführungsformen, weitere Entwicklungen und Modifikationen vorliegender Erfindung gehen aus der folgenden Beschreibung, den begleitenden Zeichnungen sowie den anhängenden Patentansprüchen hervor.

Das erfindungsgemäße Schweißhilfsfügeteil zum Setzen in mindestens ein erstes Bauteil aus schlecht-schweißbarem Material in Kombination mit einer Matrize und zum nachfolgenden Verschweißen mit mindestens einem zweiten Bauteil aus schweißbarem Material weist die folgenden Merkmale auf: einen Kopf und eine abgerundete Spitze, die kreisbogenförmig um einen Punkt auf einer Längsachse des Schweißhilfsfügeteils ausgebildet ist, wobei die abgerundete Spitze einen Spitzenradius $SR_1$ im Bereich von 0.5 mm $\leq SR_1 \leq$ 8 mm aufweist.

Das erfindungsgemäße Schweißhilfsfügeteil besteht aus einem schweißbaren Material. Des Weiteren ist es dafür ausgelegt, das zumindest ein erstes Bauteil aus schlecht-schweißbarem Material mit diesem Schweißhilfsfügeteil ausgestattet wird. Dies liefert die Grundlage dafür, dass das erste Bauteil über das eingebrachte Schweißhilfsfügeteil mit einem zweiten Bauteil aus einem schweißbaren Material mittels Schweißen verbindbar ist. Vorzugsweise wird zum schweißenden Verbinden das Widerstandsschweißen, das Lichtbogenschweißen oder ein ähnlich bekanntes Schweißverfahren eingesetzt. Die Konstruktion des Schweißhilfsfügeteils ist bevorzugt derart gestaltet, dass zunächst ein ausreichendes Materialverdrängungsverhalten durch das Schweißhilfsfügeteil im Material des ersten Bauteils realisierbar ist. Über das Materialverdrängungsverhalten und im Speziellen die Gestaltung der Spitze des Schweißhilfsfügeteils wird gewährleistet, dass das Material des ersten Bauteils weitestgehend, vorzugsweise vollständig von der an einer Matrize deformierten Spitze des Schweißhilfsfügeteils während des Setzverfahrens verdrängt wird. Auf diese Weise entsteht durch das unten näher beschriebene Setzverfahren ein Schweißbuckel oder Schweißkopf, der aufgrund nur noch vernachlässigbarer Störungen durch Restmaterial des ersten Bauteils eine zufriedenstellende Schweißlinse beim Verschweißen mit dem zweiten Bauteil realisieren kann. Zu diesem Zweck weist das erfindungsgemäße Schweißhilfsfügeteil den oben genannten Spitzenradius $SR_1$ auf. Dieser Spitzenradius wird in Abstimmung mit der für das Setzverfahren genutzten Matrize gewählt.

Ein weiteres erfindungsgemäßes Schweißhilfsfügeteil zum Setzen in mindestens ein erstes Bauteil aus schlecht-schweißbarem Material in Kombination mit einer Matrize und zum nachfolgenden Verschweißen mit mindestens einem zweiten Bauteil aus schweißbarem Material weist die folgenden Merkmale auf: einen Kopf und eine abgerundete Spitze, die kreisbogenförmig um einen Punkt auf einer Längsachse des Schweißhilfsfügeteils ausgebildet ist, wobei die abgerundete Spitze einen Spitzenradius $SR_2$ im Bereich von 0,1 mm $\leq SR_2 \leq$ 2,5 mm aufweist. Dieses weitere erfindungsgemäße Schweißhilfsfügeteil ist qualitativ in gleicher Weise aufgebaut, wie es oben bereits beschrieben worden ist. Zur Anpassung an bestimmte bevorzugte Fügeaufgaben ist die Dimension der abgerundeten Spitze des Schweißhilfsfügeteils anders ausgestaltet. Diese Ausgestaltung eröffnet die bevorzugte Kombination der abgerundeten Spitze mit einem kegelstumpfförmigen Bereich der zwischen der abgerundeten Spitze und dem Kopf des Schweißhilfsfügeteils angeordnet ist. Zudem weitet sich der hier angesprochene kegelstumpfförmige Bereich vorzugsweise in Richtung des Kopfes des Schweißhilfsfügeteils auf.

Erfindungsgemäß bevorzugt umfasst das Schweißhilfsfügeteil einen Schaft, wobei eine Außenfläche der abgerundeten Spitze direkt in eine Mantelfläche des Schafts übergeht. In Abhängigkeit von der Dicke der miteinander zu verbindenden Bauteile weist das Schweißhilfsfügeteil eine bestimmte Länge des genannten Schafts auf. Die Länge des Schafts ist variabel, um ein ausreichendes Durchdringen des zumindest einen ersten Bauteils zu realisieren. Gleichzeitig ist es aber ebenfalls bevorzugt, dass das Schweißhilfsfügeteil ohne einen Schaft genutzt wird und die abgerundete Spitze oder die abgerundete Spitze mit konusförmigem Zwischenbereich direkt in den Kopf des Schweißhilfsfügeteils übergeht. Daher hat der Schaft vorzugsweise eine Länge zwischen Kopfunterseite und kopfzugewandtem Ende der abgerundeten Spitze oder des konusförmigen Abschnitts im Bereich von 0 mm < $1_s \leq$ 15 mm.

Gemäß unterschiedlichen bevorzugten Ausführungsformen vorliegender Erfindung weist somit das Schweißhilfsfügeteil eine abgerundete Spitze auf, deren kreisbogenförmiger Verlauf sich über den gesamten Durchmesser des Schafts des Schweißhilfsfügeteils erstreckt. Sollte kein Schaft vorgesehen sein, geht der die Spitze formende Kreisbogen direkt in den Kopf des bevorzugten Schweißhilfsfügeteils über. Ist das Schweißhilfsfügeteil bevorzugt mit dem oben genannten kegelstumpfförmigen Bereich ausgestattet, dann zeigt der sich verjüngende Bereich des kegelstumpfförmigen Bereichs in Fügerichtung und bildet auf diese Weise die Spitze des Schweißhilfsfügeteils. Diese Spitze ist abgerundet entsprechend den oben angegebenen Radienbereichen des Spitzenradius $SR_1$ oder $SR_2$ ausgebildet. Somit weisen die erfindungsgemäß bevorzugten Schweißhilfsfügeteile keine scharfkantige Spitze in Fügerichtung auf. Mithilfe der bevorzugten abgerundeten Spitzengeometrie des Schweißhilfsfügeteils wird eine kontrollierte Verdrängung des Materials des zumindest einen ersten Bauteils aus dem späteren Schweißbereich unterhalb des Schweißhilfsfügeteils, d.h. in Setzrichtung des Schweißhilfsfügeteils, realisiert. Sobald die abgerundete Spitze des Schweißhilfsfügeteils auf eine Matrize trifft, deren Form auf die bevorzugte Ausgestaltung des Schweißhilfsfügeteils abgestimmt ist, wird das Material des zumindest einen ersten Bauteils in einem erfindungsgemäß bevorzugten Materialverdrängungsspalt zwischen Schweißhilfsfügeteil und Matrize radial auswärts transportiert. Auf diese Weise wird der später zur Verfügung stehende Schweißkopf oder Schweißbuckel, der durch die Verformung des erfindungsgemäß bevorzugten Schweißhilfsfügeteils an der Matrize entsteht, von störenden Materialresten des Materials des ersten Bauteils weitestgehend, bevorzugt vollständig, befreit.

Gemäß einer bevorzugten Ausgestaltung des oben beschriebenen Schweißhilfsfügeteils weist der kegelstumpfförmige Bereich einen Spitzenwinkel SW zwischen einer Mittelachse und einer Kegelmantelfläche im Bereich von 35° ≤ SW ≤ 80° auf. Dieser Spitzenwinkel SW und/oder der Spitzenradius SR ist in Abstimmung mit der für das Setzverfahren genutzten erfindungsgemäß bevorzugten Matrize (siehe unten) derart gewählt, dass ein minimaler Spalt von vorzugsweise 10° zwischen der Oberfläche des Schweißhilfsfügeteils und der Oberfläche der Matrize nicht unterschritten wird, sofern das Verformen des Schweißhilfsfügeteils an der Matrize noch nicht begonnen hat. Dieser Materialverdrängungsspalt ist anhand der sich gegenüberstehenden Matrizengeometrie und Spitzengeometrie definiert. Er stellt durch sein Mindestmaß noch vor Verformung des Schweißhilfsfügeteils sicher, dass während der Verformung ein ausreichend breiter Spalt zwischen Schweißhilfsfügeteil und Matrize zum Materialtransport zur Verfügung steht.

Vorliegende Erfindung umfasst zudem eine Matrize zum Setzen des oben beschriebenen Schweißhilfsfügeteils. Diese Matrize weist die folgenden Merkmale auf: eine konkave Vertiefung, deren Innenwand zumindest in einem Teilbereich, vorzugsweise durchgehend, kreisbogenförmig ausgebildet ist mit einem Matrizenradius MR im Bereich von 1 mm ≤ MR ≤ 8 mm. Alternativ liegt der Matrizenradius MR im Bereich 1 mm ≤ MR ≤ 60 mm oder 10 mm ≤ MR ≤ 60mm, wobei die konkave Vertiefung mittig einen Matrizengrund aufweist, der eben, gewellt oder kantig ist und an den sich der kreisbogenförmige Teilbereich anschließt. Alternativ liegt der Matrizenradius MR im Bereich 1 mm ≤ MR ≤ 60 mm oder 10 mm ≤ MR ≤ 60 mm, wobei der Matrizenradius in Bezug auf den zumindest einen Teilbereich einen Ursprung in einem Punkt auf der Mittelachse oder mindestens einer zur Mittelachse der konkaven Vertiefung parallel verlaufenden Geraden aufweist.

Gemäß einer bevorzugten Ausführungsform weist der Matrizenradius MR einen Ursprung in einem Punkt auf einer Mittelachse der konkaven Vertiefung bei einer durchgehend kreisbogenförmigen Vertiefung auf oder der Matrizenradius weist in Bezug auf den zumindest einen Teilbereich einen Ursprung in einem Punkt auf der Mittelachse oder auf mindestens einer zur Mittelachse der konkaven Vertiefung parallel verlaufenden Geraden auf.. Gemäß einer anderen bevorzugten Ausführungsform der erfindungsgemäßen Matrize weist die konkave Vertiefung den Matrizenradius MR im Bereich von 1,0 mm ≤ MR ≤ 8 mm auf, wobei sich die konkave Vertiefung in einem umlaufenden konvexen Bereich öffnet. Aus dieser bevorzugten geometrischen Gestaltung der Matrize folgt, dass sie in ihrem mittigen Bereich angrenzend an die Symmetrieachse konkav geformt ist, während sie sich entgegen der Setzrichtung in dem genannten umlaufenden konvex geformten Bereich in axialer Richtung und radial auswärts öffnet. Des Weiteren ist es bevorzugt, dass die Matrize an ihrem tiefsten Punkt ein Plateau oder einen anderen nicht-kreisbogenförmigen Verlauf aufweist. Derartige Absätze oder krummlinigen Verläufe erstrecken sich bevorzugt auch konzentrisch um die Mittelachse entlang einer radialen Innenwand der Matrize. Auch diese Formgestaltungen der Matrize realisieren in Abstimmung mit der bevorzugten Geometrie des Schweißhilfsfügeteils eine erfindungsgemäß bevorzugte radial auswärts stattfindende Verdrängung des Materials des ersten Bauteils sowie eine vorteilhafte Ausbildung eines Schweißkopfes oder Schweißbuckels zur Vorbereitung des noch auszuführenden Verschweißens mit dem zweiten Bauteil.

In diesem Zusammenhang ist es ebenfalls bevorzugt, dass der konkave Bereich der Matrize kreisbogenförmig ausgebildet ist und einen Außenradius $MR_a$ im Bereich von 10 mm ≤ $MR_a$ ≤ 50 mm aufweist.

Vorliegende Erfindung umfasst zudem verschiedene Verbindungsverfahren für ein Schweißhilfsfügeteil mit einem Kopf und einer abgerundeten Spitze, insbesondere ein Schweißhilfsfügeteil gemäß einer der oben beschriebenen Ausführungsformen, zum Setzen in mindestens ein erstes Bauteil mithilfe einer Matrize als Gegenlager. Im Hinblick auf die erfindungsgemäßen Verbindungsverfahren werden unterschiedliche bevorzugte Geometrien des Schweißhilfsfügeteils mit speziell darauf abgestimmten Geometrien der Matrize kombiniert, um ein optimales Setzen des Schweißhilfsfügeteils im ersten Bauteil aus einem schlecht-schweißbaren Material bei gleichzeitiger Ausbildung eines vorteilhaften Schweißkopfes für das nachfolgende Verschweißen zu realisieren. Bei einem ersten erfindungsgemäßen Verbindungsverfahren weist die als Gegenlage eingesetzte Matrize eine konkave Vertiefung mit einer zumindest in einem Teilbereich kreisbogenförmigen Innenwand mit einem Matrizenradius MR im Bereich von 1,0 mm ≤ MR ≤ 60 mm auf. Davon ausgehend weist das erfindungsgemäße Setzverfahren den folgenden Schritt auf: Setzen des Schweißhilfsfügeteils in das mindestens eine erste Bauteil aus schlecht-schweißbarem Material und gegen die Matrize, wobei zwischen einer Spitzengeometrie des Schweißhilfsfügeteils und einer Matrizengeometrie ein Materialverdrängungsspalt vorgesehen ist, wenn folgende Bedingungen erfüllt sind:

$$0,001 \leq \frac{SR}{MR} \leq 0,1 \text{, insbesondere } 0,002 \leq \frac{SR}{MR} \leq 0,08 \text{,}$$

wobei SR einen Spitzenradius der abgerundeten Spitze des Schweißhilfsfügeteils bezeichnet. Die hier angegebenen Verhältnisse zwischen dem Spitzenradius SR des Schweißhilfsfügeteils und dem Matrizenradius MR der Vertiefung der Matrize sind derart gewählt, dass der oben genannte Materialverdrängungsspalt zwischen der Spitzengeometrie des Schweißhilfsfügeteils und der Matrizengeometrie der Matrize ausreichend groß ist, um eine Materialverdrängung des Materials des ersten Bauteils aus dem Bereich unterhalb der Spitze des Schweißhilfsfügeteils zu gewährleisten. Zu diesem Zweck ist es ebenfalls bevorzugt, dass der Spitzenradius SR und der Matrizenradius MR in dem Verhältnis MR ≥ 2•SR zueinander stehen.

Des Weiteren wird vorzugsweise das erfindungsgemäße Verbindungsverfahren dadurch unterstützt, dass der Matrizenradius MR aus dem Bereich von 20 mm ≤ MR ≤ 40 mm und der Spitzenradius SR aus dem Bereich 0,1 mm ≤ SR ≤ 1,5 mm ausgewählt ist.

Gemäß einer weiteren bevorzugten Ausführungsform des erfindungsgemäßen Verbindungsverfahrens weist das Schweißhilfsfügeteil einen kegelstumpfförmigen Bereich auf, der zwischen der abgerundeten Spitze und dem Kopf angeordnet ist. Diese geometrische Ausbildung des Schweißhilfsfügeteils unterstützt die Herstellung einer verlässlichen Verbindung, wenn sich der kegelstumpfförmige Bereich vorzugsweise in Richtung Kopf des Schweißhilfsfügeteils aufweitet und einen Spitzenwinkel SW zwischen einer Mittelachse des kegelstumpfförmigen Bereichs und einer Kegelmantelfläche ausgewählt aus dem Bereich von 35° ≤ SW ≤ 80° aufweist. Gerade auch diese Formgestaltung des Schweißhilfsfügeteils unterstützt das Zusammenwirken mit der auf das Schweißhilfsfügeteil abgestimmten Matrizengeometrie.

Vorliegende Erfindung umfasst ein weiteres erfindungsgemäßes Verbindungsverfahren für ein Schweißhilfsfügeteil mit einem Kopf und einer abgerundeten Spitze, insbesondere ein Schweißhilfsfügeteil wie es oben bereits beschrieben worden ist. Dieses erfindungsgemäße Verbindungsverfahren dient dem Setzen des Schweißhilfsfügeteils in mindestens ein erstes Bauteil aus schlecht-schweißbarem Material mithilfe einer Matrize als Gegenlager, die eine konkave Vertiefung mit einer zumindest in einem Teilbereich kreisbogenförmigen Innenwand mit einem Matrizenradius MR im Bereich von 1,0 mm ≤ MR ≤ 60 mm aufweist. Das erfindungsgemäße Verbindungsverfahren weist den folgenden Schritt auf: Setzen des Schweißhilfsfügeteils in das mindestens eine erste Bauteil und gegen die Matrize, wobei zwischen einer Spitzengeometrie des Schweißhilfsfügeteils und einer Matrizengeometrie ein Materialverdrängungsspalt vorgesehen ist, wenn folgende Bedingungen erfüllt sind:

$$0,01 \leq \frac{SR}{MR} \leq 1 \text{, insbesondere } 0,1 \leq \frac{SR}{MR} \leq 0,6 \text{,}$$

wobei SR einen Spitzenradius der abgerundeten Spitze des Schweißhilfsfügeteils bezeichnet.

Im Vergleich zu den zuvor beschriebenen Verbindungsverfahren weist die hier verwendete Matrize einen kleineren Matrizenradius MR auf. Somit ergeben sich andere bevorzugte Verhältnisse des Spitzenradius SR zum Matrizenradius MR, die den vorteilhaften Materialverdrängungsspalt zwischen der Spitzengeometrie und der Matrizengeometrie gewährleisten. Gemäß einer bevorzugten Ausführungsform dieses erfindungsgemäßen Verbindungsverfahrens weist die Matrize die konkave Vertiefung mit dem Matrizenradius MR im Bereich von 1,5 mm ≤ MR ≤ 5 mm auf, wobei sich die konkave Vertiefung in einem umlaufenden konvexen Bereich öffnet, insbesondere mit einem äußeren Matrizenradius $MR_a$ im Bereich von 15 mm ≤ $MR_a$ ≤ 40 mm. Mithilfe dieser Formgestaltung der Matrize entsteht eine grubenähnliche Vertiefung, in die das Schweißhilfsfügeteil gesetzt wird. Die daraus folgende Materialverdrängung des zumindest einen ersten Bauteils sowie die Verformung des Schweißhilfsfügeteils ist vorteilhaft für die Ausbildung eines Schweißpickels für die spätere Schweißinitialisierung.

Weiterhin bevorzugt stehen der Spitzenradius SR und der Matrizenradius MR in dem Verhältnis MR ≥ 2 • SR zueinander. Des Weiteren ist es bevorzugt, dass der Matrizenradius MR ausgewählt ist aus einem Bereich 1,5 mm ≤ MR ≤ 5 mm und das der Spitzenradius SR ausgewählt ist von 0,1 mm ≤ SR ≤ 1,5 mm. Gemäß einer weiteren bevorzugten Ausführungsform des erfindungsgemäßen Verbindungsverfahrens weist das Schweißhilfsfügeteil vorzugsweise einen kegelstumpfförmigen Bereich auf, der zwischen der abgerundeten Spitze und dem Kopf des Schweißhilfsfügeteils angeordnet ist, der sich in Richtung Kopf aufweitet und der einen Spitzenwinkel SW zwischen einer Mittelachse des kegelstumpfförmigen Bereichs und einer Mantelfläche im Bereich von 35° ≤ SW ≤ 80° aufweist. Die mit dieser bevorzugten Geometrie im Zusammenhang stehenden Verfahrensvorteile wurden bereits oben zusammenfassend erläutert und gelten hier in gleicher Weise.

Vorliegende Erfindung umfasst ein weiteres Verbindungsverfahren für ein Schweißhilfsfügeteil mit einem Kopf und einer abgerundeten Spitze, insbesondere eines der oben beschriebenen Schweißhilfsfügeteile, zum Setzen in mindestens ein erstes Bauteil aus schlecht-schweißbarem Material mit einer Matrize als Gegenlager, die eine kokave Vertiefung mit einer zumindest in einem Teilbereich kreisbogenförmigen Innenwand mit einem Matrizenradius MR im Bereich von 1,0 mm ≤ MR ≤ 60 mm aufweist. Dieser Schritt des Verbindungsverfahrens dient zur Vorbereitung eines nachfolgenden Schweißverfahrens. Das erfindungsgemäße Verbindungsverfahren weist die folgenden Schritte auf: Setzen des Schweißhilfsfügeteils in das mindestens eine erste Bauteil und gegen die Matrize, wobei zwischen einer Spitzengeometrie des Schweißhilfsfügeteils und einer Matrizengeometrie ein Materialverdrängungsspalt vorgesehen ist, wenn folgende Bedingungen erfüllt sind:

$$0{,}01 \le \frac{SR}{MR} \le 0{,}5 \,,\; \text{insbesondere} \;\; 0{,}03 \le \frac{SR}{MR} \le 0{,}3,$$

wobei SR einen Spitzenradius der abgerundeten Spitze des Schweißhilfsfügeteils bezeichnet. Das erfindungsgemäße Verbindungsverfahren ist vorzugsweise auf die Herstellung einer Verbindung mithilfe eines Schweißhilfsfügeteils gerichtet, dessen abgerundete Spitze sich über den gesamten Durchmesser eines Schafts des Schweißhilfsfügeteils erstreckt oder dessen abgerundete Spitze direkt in den Kopf des Schweißhilfsfügeteils übergeht. Aufgrund dieser geometrischen Ausgestaltung der Spitzengeometrie des Schweißhilfsfügeteils und der Matrize ergibt sich eine Wechselwirkung der konkaven, vorzugsweise durchgehend kreisbogenförmigen, Vertiefung der Matrize und der Kreisbogenform der Spitze des Schweißhilfsfügeteils, die zwischen sich den Materialverdrängungsspalt bilden. Sofern die oben genannten Verhältnisse zwischen Spitzenradius SR und Matrizenradius MR erfüllt sind, wird das nicht-schweißbare Material des ersten Bauteils radial auswärts verdrängt, sodass es nur noch vernachlässigbar gering, vorzugsweise gar nicht mehr, im Bereich des späteren Schweißbuckels des deformierten Schweißhilfsfügeteils vorhanden ist. Somit gewährleisten die hier angegebenen Verhältnisse des Spitzenradius SR und des Matrizenradius MR eine verläßliche radiale Materialverdrängung durch den Materialverdrängungsspalt sowie die Ausbildung eines vorteilhaften Schweißbuckels oder Schweißkopfes, um dann die Schweißverbindung zum zweiten Bauteil aus schweißbarem Material herstellen zu können.

Erfindungsgemäß bevorzugt weisen der Spitzenradius SR und der Matrizenradius MR das Verhältnis MR ≥ 2 · SR zueinander auf. Es ist des Weiteren bevorzugt, dass der Matrizenradius MR aus dem Bereich 20 mm ≤ MR ≤ 40 mm und der Spitzenradius SR aus dem Bereich 1 mm ≤ SR ≤ 1,5 mm ausgewählt ist.

Vorliegende Erfindung umfasst des Weiteren ein Verbindungsverfahren für ein Schweißhilfsfügeteil mit einem Kopf und einer Spitze zum Setzen in mindestens ein erstes Bauteil aus schlecht-schweißbarem Material mit einer Matrize als Gegenlage, die eine Vertiefung mit einem Matrizenwinkel MW zwischen einer Mittelachse der Vertiefung und einer Innenwand der Vertiefung, zur Vorbereitung eines nachfolgenden Schweißverfahrens aufweist, wobei das Verbindungsverfahren den folgenden Schritt aufweist: Setzen des Schweißhilfsfügeteils in das mindestens eine erste Bauteil und gegen die Matrize, wobei zwischen dem Schweißhilfsfügeteil und der Matrize ein Materialverdrängungsspalt vorgesehen ist, wenn folgende Bedingung erfüllt ist:

$$0{,}4 \le \frac{SW_1}{MW} \le 1{,}0 \,,\; \text{insbesondere} \;\; 0{,}6 \le \frac{SW}{MW_1} \le 0{,}8,$$

wobei SW einen Spitzenwinkel der Spitze des Schweißhilfsfügeteils gemessen zwischen der Mittelachse und der Außenseite des Schweißhilfsfügeteils bezeichnet.

Gemäß diesem hier beschriebenen Verbindungsverfahren wird ein Schweißhilfsfügeteil mit nicht abgerundeter Spitze in ein erstes Bauteil gesetzt. Die als Gegenlager wirkende Matrize weist eine winklige Vertiefung im Gegensatz zu den zuvor beschriebenen kreisbogenförmigen Vertiefungen auf. Dementsprechend erzeugt gerade die vorteilhafte Abstimmung des Spitzenwinkels SW und des Matrizenwinkels MW den vorteilhaften Materialverdrängungsspalt, der einerseits die radiale Abfuhr des Materials des ersten Bauteils und andererseits eine vorteilhafte Ausbildung eines Schweißkopfes bzw. eines Schweißbuckels durch Deformation des Schweißhilfsfügeteils unterstützt.

In diesem Zusammenhang ist es bevorzugt, dass die Matrize eine winklige Vertiefung mit dem Matrizenwinkel MW im Bereich von 70° ≤ MW ≤ 90° aufweist. Gemäß einer weiteren bevorzugten Ausführungsform vorliegender Erfindung erfüllen der Spitzenwinkel SW und der Matrizenwinkel MW das folgende Verhältnis: MW - SW ≥ 10°. Ebenfalls bevorzugt ist die Wahl des Spitzenwinkels SW aus dem Bereich 35° ≤ SW ≤ 80°.

Es ist weiterhin bevorzugt, dass alle oben beschriebenen erfindungsgemäßen Verbindungsverfahren den weiteren Schritt aufweisen: Verschweißen des ersten Bauteils mit Schweißhilfsfügeteil mit einem zweiten Bauteil aus schweißbarem Material. Des Weiteren ist es für alle oben beschriebenen Verbindungsverfahren erfindungsgemäß bevorzugt, dass das Schweißhilfsfügeteil beim Setzen in das mindestens eine erste Bauteil auf eine Geschwindigkeit im Bereich von 1 m/s ≤ v ≤ 40 m/s beschleunigt wird, weiter bevorzugt im Bereich von 10 m/s ≤ v ≤ 40 m/s, noch mehr bevorzugt im Bereich von 20 m/s ≤ v ≤ 40 m/s und zudem bevorzugt auf mindestens 30 m/s.. Die hier bevorzugt eingesetzte hohe Setzgeschwindigkeit für das Schweißhilfsfügeteil hat den Vorteil, dass im Vergleich zum Stand der Technik die für den Setzvorgang erforderliche Zeit minimiert wird. Des Weiteren sorgt die aufgrund der Geschwindigkeit vorliegende hohe kinetische Energie des Schweißhilfsfügeteils für eine verlässliche Deformation des Schweißhilfsfügeteils an der Matrize. Auf diese Weise ist gewährleistet, dass während des Deformierens des Schweißhilfsfügeteils an der Matrize der das Schweißen begünstigende Schweißbuckel oder Schweißkopf ausgeformt wird und das Material des ersten Bauteils aus dem Spitzenbereich des Schweißhilfsfügeteils radial auswärts verdrängt wird. Auch in den oben beschriebenen Verbindungsverfahren weist das Schweißhilfsfügeteil vorzugsweise einen Schaft auf, wie er bereits oben beschrieben worden ist.

Vorliegende Offenbarung umfasst zudem ein Herstellungsverfahren für ein Schweißhilfsfügeteil, insbesondere ein Schweißhilfsfügeteil, wie es oben beschrieben worden ist, das folgendes aufweist: Kaltschlagen des Schweißhilfsfügeteils, das einen Kopf und eine abgerundete Spitze aufweist.

Zudem umfasst vorliegende Offenbarung ein Herstellungsverfahren für eine Matrize, insbesondere eine Matrize, wie sie oben beschrieben worden ist, das folgendes aufweist: Ausformen und Endbearbeiten einer kreisbogenförmigen Vertiefung mit einem Matrizenradius MR um einen Punkt auf einer Mittelachse der kreisbogenförmigen Vertiefung im Bereich von 1,0 mm ≤ MR ≤ 60 mm.

## 4. Kurze Beschreibung der begleitenden Zeichnungen

Die vorliegende Erfindung wird unter Bezugnahme auf die begleitenden Zeichnungen näher erläutert. Es zeigen:

Figur 1 die Grundstruktur des hier gezeigten Verbindungsverfahrens bestehend aus Setzverfahren und Verschweißen gemäß DE 10 2012 010 870 aus dem Stand der Technik,

Figur 2 eine schematische Seitenansicht und teilweise Schnittansicht einer bevorzugten Ausführungsform des erfindungsgemäßen Schweißhilfsfügeteils,

Figur 3 eine perspektivische Seitenansicht und Schnittansicht einer erfindungsgemäß bevorzugten Matrize,

Figur 4 ein schematischer Vertikalschnitt durch eine bevorzugte Ausführungsform einer Matrize parallel zur Mittelachse der Matrize,

Figur 5 eine erste nicht beanspruchte Kombination von Geometrien des Schweißhilfsfügeteils und der Matrize für den Setzvorgang,

Figur 6 Eine weitere bevorzugte Kombination einer Geometrie des Schweißhilfsfügeteils mit einer Geometrie der Matrize für den Setzvorgang des Schweißhilfsfügeteils,

Figur 7 eine weitere bevorzugte Kombination einer Geometrie des Schweißhilfsfügeteils mit einer daran angepassten Geometrie der Matrize für das Setzverfahren und

Figur 8 eine weitere bevorzugte Kombination der Geometrie des Schweißhilfsfügeteils mit einer daran angepassten Geometrie der Matrize für den Setzvorgang des Schweißhilfsfügeteils.

## 5. Detaillierte Beschreibung der bevorzugten Ausführungsformen vorliegender Erfindung

Vorliegende Erfindung dient dazu, mindestens ein erstes Bauteil 20, 22 aus nicht- und schlecht-schweißbarem Material, im Weiteren als schlecht-schweißbares Material bezeichnet, mit mindestens einem zweiten Bauteil 30 aus schweißbarem Material mittels Schweißen zu verbinden. Dazu wird ein Schweißhilfsfügeteil 10 bestehend aus schweißbarem Material zunächst in das mindestens eine erste Bauteil 20, 22 gesetzt. Nach Abschluss des Setzvorgangs des Schweißhilfsfügeteils 10 verschweißt man das erste Bauteil 20 über das gesetzte Schweißhilfsfügeteil 10 mit dem zweiten Bauteil 30. Dabei wird eine Schweißverbindung zwischen dem Schweißhilfsfügeteil 10 und dem zweiten Bauteil 30 hergestellt. Ein derartiges Verfahren ist in DE 10 2012 010 870 beschrieben, auf das für ergänzende technische Informationen Bezug genommen wird.

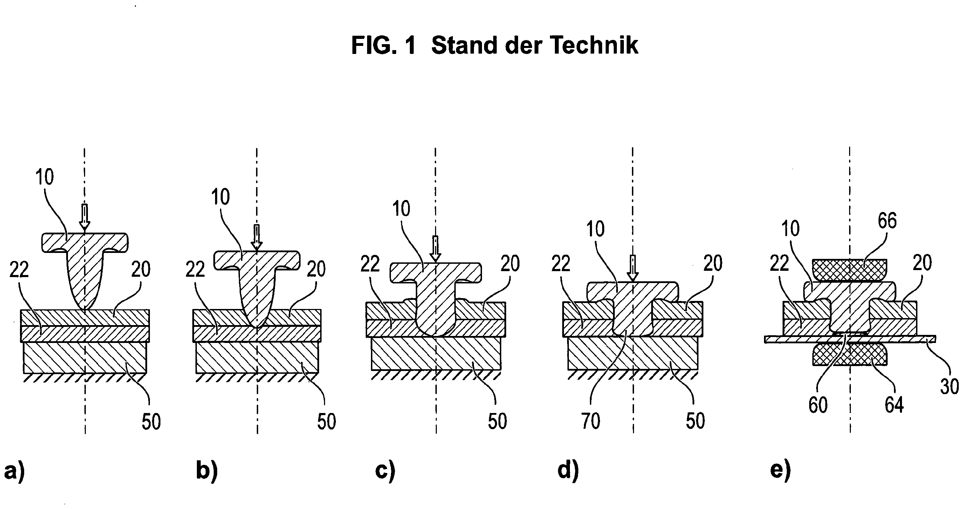

Beispielgebend zeigt Figur 1 die Figur 16 aus DE 10 2012 010 870. Hier wird zunächst das Schweißhilfsfügeteil 10 in die beiden ersten Bauteile 20, 22 aus schlecht-schweißbarem Material gesetzt. Eine Matrize 50, auf die unten näher eingegangen wird, bildet ein Gegenlager für den Setzvorgang des Schweißhilfsfügeteils 10. Das Schweißhilfsfügeteil 10 ist nagelförmig ausgebildet. Die Form des Schweißhilfsfügeteils 10 ist ebenfalls unten näher erläutert.

In den Teilschritten a, b, c und d gemäß Figur 1 wird zunächst das Schweißhilfsfügeteil 10 durch einen Stempel (nicht gezeigt) mit einer Kraft F im Wesentlichen drehungsfrei in die nicht vorgelochten ersten Bauteile 20, 22 gesetzt. Dabei findet eine Materialverdrängung durch das Schweißhilfsfügeteil 10 in den ersten Bauteilen 20, 22 statt, ohne dass während des Setzvorgangs Bauteilmaterial ausgestanzt wird. In Darstellung d ist erkennbar, dass das Schweißhilfsfügeteil 10 an der Matrize 50 deformiert wird. Die Deformation im Bereich der Spitze des Schweißhilfsfügeteils bildet einen Schweißkopf 70, einen Schweißbuckel oder allgemein eine geeignete Schweißkontaktfläche, um gemäß Bild e mit dem zweiten Bauteil 30 verschweißt zu werden. Das Verschweißen findet mittels bekannten elektrischen Schweißverfahren, beispielsweise das Widerstandsschweißen, statt, bei dem Schweißelektroden 64, 66 das zweite Bauteil 30 und das Schweißhilfsfügeteil 10 kontaktieren. Dadurch fließt ein elektrischer Schweißstrom zwischen den Schweißelektroden 64, 66, der an der Grenzfläche zwischen Schweißhilfsfügeteil 10 und dem zweiten Bauteil 30 eine Schweißlinse 60 und nach Abkühlung eine Schweißverbindung erzeugt. Die Größe, Form und Geschwindigkeit sowie Art der Ausbildung der Schweißlinse 60 ist unter anderem abhängig von der Schweißkontaktfläche des beim Setzen deformierten Schweißhilfsfügeteils 10 zum zweiten Bauteil 30. Eine geeignete Erzeugung und Konfiguration der Schweißkontaktfläche erfolgt durch die Deformation des Schweißhilfsfügeteils 10 an der Matrize 50, wobei erfindungsgemäß bevorzugt die Form eines Spitzenbereichs 13 des Schweißhilfsfügeteils 10 auf eine Form der Matrize 50 im Auftreffbereich des Schweißhilfsfügeteils 10 beim Setzen abgestimmt ist.

Die Materialien der zu verbindenden Bauteile 20 und 30 sind nicht schweißkompatibel zueinander, sodass sie mittelbar über das Schweißhilfsfügeteil 10 miteinander verschweißt werden. Zu den schweißbaren Materialen zählen Stähle und hochfeste Stähle, wie beispielsweise 22MnB5 (CEV=0,5), B27 (CEV=0,54), 32MnCrB6 (CEV=0,6), aus denen unter anderem Rahmenstrukturen im Fahrzeugbau gefertigt werden. Nicht- oder schlechtschweißbare Materialien umfassen Materialien, die sich ohne konstruktive Hilfsmittel nicht oder nur schlecht mit anderen Bauteilen verschweißen lassen. Dazu gehören auch schweißbare Materialien, die jedoch in ihrer Materialkombination zu dem Material eines zu verbindenden Bauteils keine oder nur eine geringe Schweißkompatibilität aufweisen. Das bedeutet, dass die allgemein schweißbaren Materialien sich gerade nicht oder nur schlecht bzw. schwer untereinander verschweißen lassen. Zu diesen Werkstoffen zählen beispielsweise Kunststoffe, faserverstärkte Kunststoffe, Aluminium, Gusseisen oder andere Gusslegierungen sowie Stähle, wie beispielsweise Federstähle mit einem CEV > 0,8.

Ein Setzen des Schweißhilfsfügeteils 10 erfolgt durch den oben genannten Stempel, der mithilfe eines hydraulischen, elektromagnetischen, elektrischen, pneumatischen oder gasbetriebenen Antriebs bewegt wird. Gemäß einer bevorzugten Ausführungsform vorliegender Erfindung wird das Schweißhilfsfügeteil je nach Fügeaufgabe mithilfe einer impulsförmigen Kraft eingetrieben, die das Schweißhilfsfügeteil 10 auf eine Geschwindigkeit im Bereich von 1 m/s bis 40 m/s, vorzugsweise 1 m/s bis einschließlich 5 m/s, weiter bevorzugt im Bereich von $10\ \text{m/s} \leq v \leq 40\ \text{m/s}$, noch mehr bevorzugt im Bereich von $20\ \text{m/s} \leq v \leq 40\ \text{m/s}$ und zudem bevorzugt auf mindestens 30 m/s, beschleunigt. Ein derartiges Eintreib- bzw. Setzverfahren ist in DE 10 2006 002 238 beschrieben, worauf an dieser Stelle Bezug genommen wird. Nach Abschluss des Setzverfahrens liegt das mindestens eine Bauteil 20, 22 aus nicht- oder schlecht-schweißbarem Material mit dem Schweißhilfsfügeteil 10 vor, das die bündig oder überstehend angeordnete Schweißkontaktfläche, im Weiteren Schweißkopf genannt, bereitstellt. Zudem steht auch ein Kopf 12 des Schweißhilfsfügeteils vom Bauteil 20, 22 ab oder liegt an diesem an. Da das mindestens eine erste Bauteil 20, 22 und das Schweißhilfsfügeteil 10 verlässlich miteinander verbunden sind, ist es bevorzugt, diesen Verbund zu transportieren und andernorts zu verschweißen. In gleicher Weise kann sich auch das folgende Verschweißen an das Setzen direkt vor Ort anschließen.

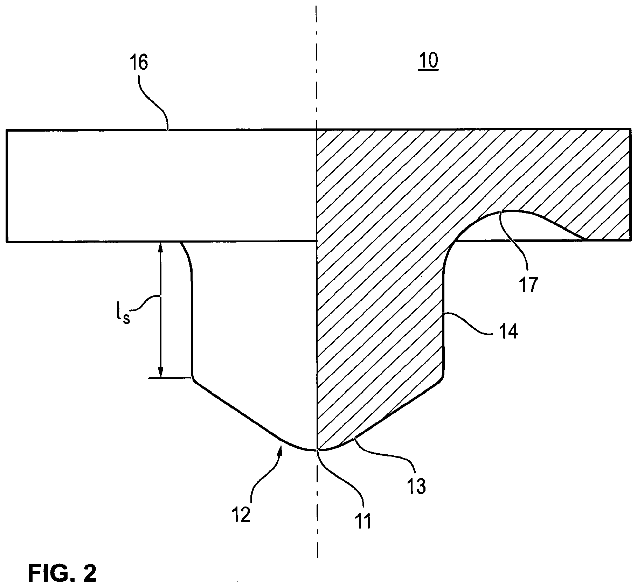

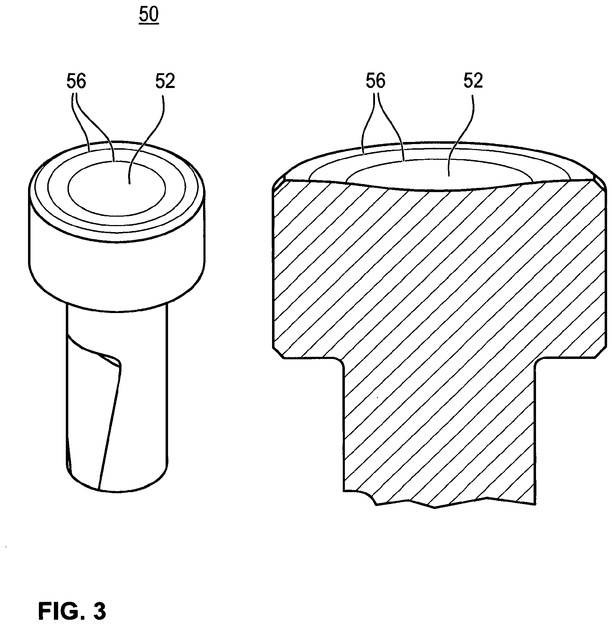

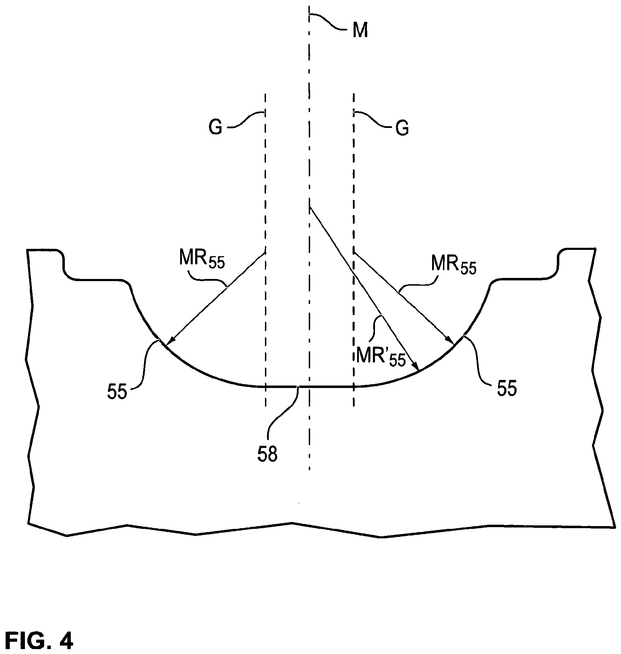

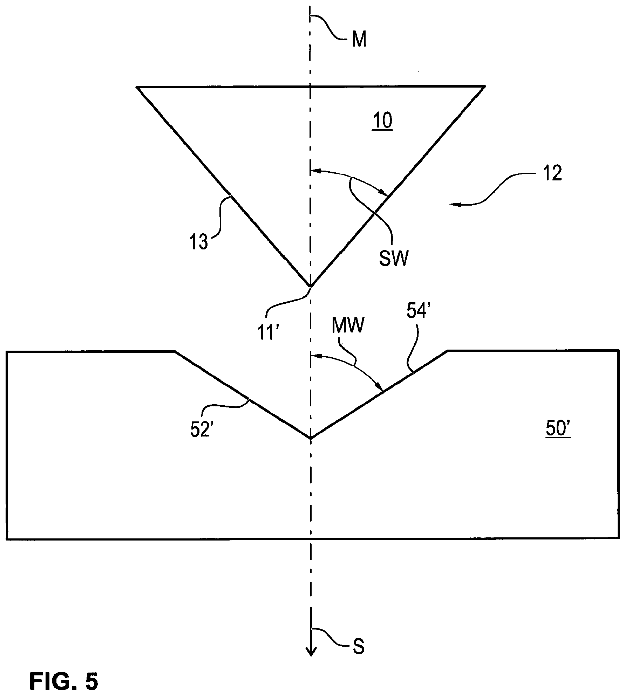

Wie oben bereits erwähnt worden ist, wird die Ausbildung des Schweißkopfs 70 erfindungsgemäß durch eine gezielte Abstimmung der Form des Schweißhilfsfügeteils 10, im Speziellen die Form eines Spitzenbereichs 12, und einer Form der Matrize 50 aufeinander erzielt. Eine bevorzugte Ausführungsform des Schweißhilfsfügeteils 10 ist in Figur 2 dargestellt. Figur 3 zeigt eine Seiten- und Schnittansicht einer bevorzugten Matrize 50. Figur 4 zeigt schematisch eine weitere bevorzugte geometrische Gestaltung der Matrize 50 gemeinsam mit den Parametern zu ihrer Beschreibung. Aus den Figuren 5 bis 8 gehen bevorzugte aufeinander abgestimmte Formgestaltungen des Schweißhilfsfügeteils 10 und der Matrize 50 hervor.

Figur 2 zeigt eine teilweise Schnittdarstellung des bevorzugten Schweißhilfsfügeteils 10 mit dem Spitzenbereich 12, einem Schaft 14 und einem Kopf 16. Allgemein ist es erforderlich, dass das Schweißhilfsfügeteil 10 an die Fügeaufgabe und im Speziellen an die Materialeigenschaften des mindestens einen ersten Bauteils 20 angepasst ist. Im Speziellen muss das Schweißhilfsfügeteil 10 härter sein als das mindestens eine erste Bauteil 20. Auf diese Weise ist gewährleistet, dass eine Verformung des Schweißhilfsfügeteils 10 erst nach der Durchdringung des mindestens einen ersten Bauteils 20 stattfindet. Zudem wird vermieden, dass sich das Schweißhilfsfügeteil 10 schon während des Durchdringend des ersten Bauteils 20 lateral aufweitet. Des Weiteren weist bevorzugtes Schweißhilfsfügeteil 10 eine ausreichende Restduktilität auf, um sich beim Auftreffen auf die Matrize 50 rissfrei plastisch zu verformen. Außerdem hat man erkannt, dass mit steigender Festigkeit des Schweißhilfsfügeteils 10 auch eine höhere Eintreibenergie des Schweißhilfsfügeteils 10 erforderlich ist. So sind beispielsweise für dünne Aluminiumbleche der Stärke 0,8 bis 2,5 mm Festigkeiten des Schweißhilfsfügeteils im Bereich von 800 bis 1200 $N/mm^2$ erforderlich. Die Festigkeiten schwanken in diesem Bereich in Abhängigkeit von der Geometrie der Spitze des Schweißhilfsfügeteils 10. In Abstimmung auf das Material des Schweißhilfsfügeteils 10 ist das Material der Matrize 50 härter gewählt, um die Verformung des Schweißhilfsfügeteils 10 zu gewährleisten.

Bezugnehmend auf die Darstellung des Schweißhilfsfügeteils 10 in Figur 2 weist der Kopf 16 bevorzugt einen Durchmesser von 5 bis 12 mm, vorzugsweise 7 bis 10 mm, weiter bevorzugt 8 mm, auf. In Abhängigkeit von der zu lösenden Fügeaufgabe und der von dem Schweißhilfsfügeteil 10 geforderten Stabilität der späteren Verbindung variiert die Höhe des Kopfes 16 im Bereich von 0,8 bis 2 mm, vorzugsweise von 1,0 bis 1,8 mm. Gemäß einer weiteren bevorzugten Ausführungsform ist der Kopf an seiner Oberseite, d.h. entgegengesetzt zur Fügerichtung S, plan ausgebildet. Auf diese Weise wird eine ausreichend große Angriffsfläche für den Treiberkolben bereitgestellt. Es ist weiterhin bevorzugt, den Kopf 16 seitlich mit einer zylindrischen oder einer abgerundeten Mantelfläche auszustatten.

Des Weiteren umfasst der Kopf 16 eine Unterkopfringnut 17. Diese Unterkopfringnut 17 dient der Materialaufnahme des aus dem mindestens einen ersten Bauteil 20 verdrängten Materials. Diese Materialaufnahme in der Unterkopfringnut 17 wirkt sich vorzugsweise stabilisierend bei einer Scherbelastung des bereits gesetzten Schweißhilfsfügeteils 10 im Bauteil 20 aus. Die Unterkopfringnut 17 besitzt eine bevorzugte Höhe von 0,2 bis 0,6 mm und eine bevorzugte Breite von 1,5 bis 2,0 mm. Zudem läuft die Unterkopfringnut vorzugsweise radial aufwärts aus, sodass eine äußere plane Ringfläche an der Kopfunterseite des Kopfes 16 entsteht. Diese Ringfläche stützt sich auf dem ersten Bauteil 20 ab und vermeidet durch eine ausreichende radiale Breite eine Kerbwirkung der Kopfunterseite im ersten Bauteil 20. Zudem schließt vorzugsweise nach Abschluss des Setzvorgangs die Kopfunterseite durch Auflage auf dem Bauteil den Bereich der Unterkopfringnut korrosionshemmend, bevorzugt hermetisch und ohne Spalt zwischen Kopfunterseite und Bauteil, ab.

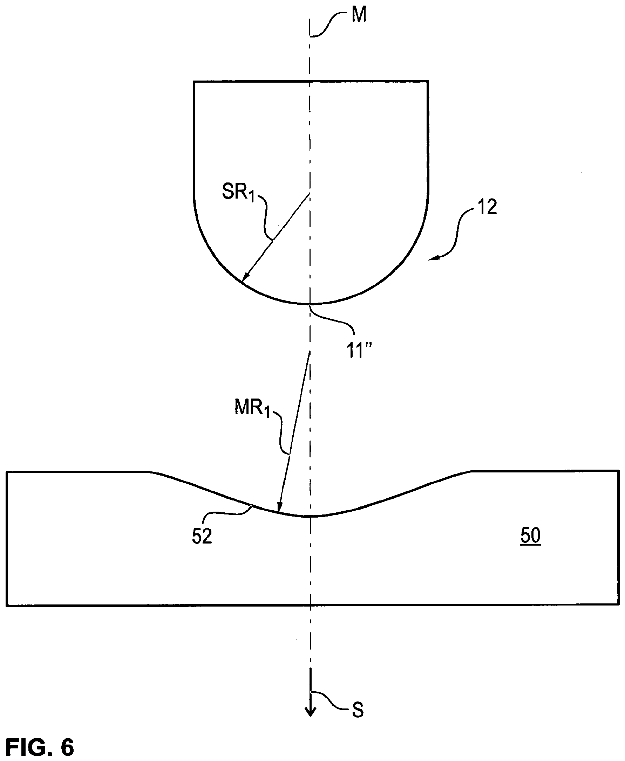

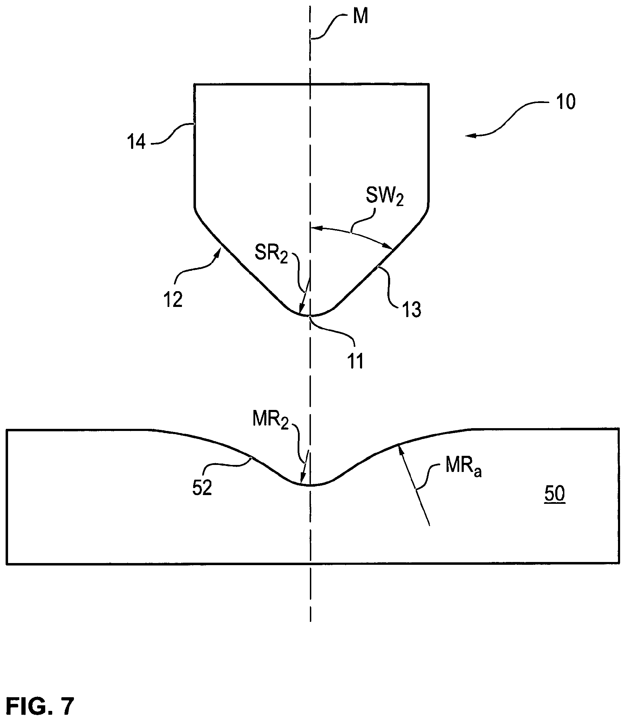

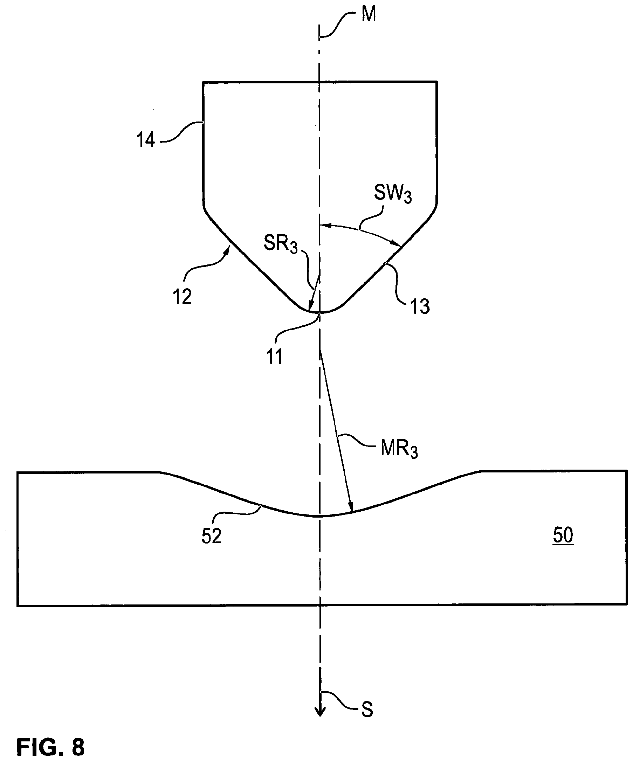

Der Schaft 14 ist ein optionales Element des Schweißhilfsfügeteils. Er verbindet den Kopf mit dem Spitzenbereich 12. Es ist ebenfalls bevorzugt, den Spitzenbereich 12, der vorzugsweise mit einer scharfen Spitze (siehe Figur 5), einer kalottenförmigen runden Spitze (siehe Figur 6) oder mit einer abgerundeten Spitze (siehe Figuren 7 und 8) ausgestattet ist, direkt an den Kopf 16 anzuschließen. Während des Setzvorgangs stabilisiert der Schaft 14 das Schweißhilfsfügeteil 10 beim Eindringen in das erste Bauteil 20. Zudem wird der Schaft gemeinsam mit dem Spitzenbereich 12 an der Matrize 50 gestaucht, wodurch er sich radial aufweitet. Da der Durchmesser des Schafts 14 am Übergang zwischen Schaft 14 und Spitzenbereich 12 nach dem Stauchen größer ist als der Schaftdurchmesser am Übergang zwischen Schaft 14 und Kopf 16, bildet der Schaft einen Hinterschnitt aus, der den Halt des Schweißhilfsfügeteils im ersten Bauteil 10 unterstützt. Vorzugsweise weist der Schaft einen Durchmesser von 3 bis 4 mm auf. Die Länge des Schafts 14 variiert in Abhängigkeit von der Dicke der miteinander zu verbindenden Bauteile 20, 22 im Bereich von $0 \text{ mm} < 1_s \leq 15 \text{ mm}$, bevorzugt mindestens 1 mm und weiter bevorzugt $1 \text{ mm} \leq 1_s \leq 6 \text{ mm}$

Der Spitzenbereich 12 des Schweißhilfsfügeteils 10 besteht aus einer Spitze 11 und einem sich daran anschließenden kegelstumpfförmigen Bereich 13. Der Spitzenbereich 12 beeinflusst die Materialverdrängung während des Eindringens des Schweißhilfsfügeteils 10 in das erste Bauteil 20. Es ist bevorzugt, den Spitzenbereich 12 durch die bereits oben genannte Spitze 11 und den kegelstumpfförmigen Bereich 13 zu bilden. Diese Spitze 11 ist nicht scharf ausgebildet sondern weist erfindungsgemäß eine abgerundete Form auf. Gemäß einer weiteren bevorzugten Ausführungsform weist der Spitzenbereich 12 eine Kalottenform auf. In diesem Fall schließt der Schaft in Fügerichtung mit einer Kreisbogenform ab, wobei der Durchmesser des Kreisbogens den gesamten Durchmesser des Schafts 14 abdeckt.

Die unterschiedlichen Formgestaltungen des Spitzenbereichs 12 sind in den Figuren 5 bis 8 veranschaulicht. Figur 5 zeigt eine nicht-beanspruchte scharfe Spitze 11', die in den kegelstumpfförmigen Bereich 13 übergeht. Die scharfe Spitze 11' ist durch einen Spitzenwinkel SW charakterisiert, der zwischen Mittelachse M und radial äußerer Mantelfläche der Spitze 11' und des kegelförmigen Bereichs 13 definiert ist. Der Spitzenwinkel SW beschreibt daher auch die Form des kegelförmigen Bereichs 13.

In Figur 6 ist der Spitzenbereich 12 oder kegelstumpfförmige Bereich 13 abgerundet ausgestaltet. Die abgerundete Spitze 11" erstreckt sich ähnlich einer Kalotte über den gesamten Durchmesser des Schafts 14. Es ist ebenfalls bevorzugt, auf den Schaft 14 zu verzichten, sodass der Spitzenbereich 12 direkt in den Kopf 16 übergeht. Die abgerundete Spitze 11 in Figur 6 wird durch einen Spitzenradius SR beschrieben. Der Kreisbogen mit dem Spitzenradius SR, der die abgerundete kalottenförmige Spitze 11" bildet, hat seinen Mittelpunkt auf der Mittelachse M.

In den Figuren 7 und 8 ist der Spitzenbereich 12 eine Kombination aus der abgerundeten Spitze 11 mit dem kegelstumpfförmigen Bereich, der in den optionalen Schaft 14 übergeht.

Gemäß einer weiteren bevorzugten Ausführungsform des kegelstumpfförmigen Bereichs 13 ist die Mantelfläche eben oder krummlinig ausgebildet. Die Biegung der Mantelfläche verläuft konvex oder konkav, um das Materialverdrängungsverhalten beim Eindringen in das erste Bauteil 20 zu beeinflussen. Es ist ebenfalls bevorzugt, den kegelförmigen Bereich 13 anstelle einer runden Grundfläche mit einer dreieckigen, viereckigen oder polyedrischen Grundfläche auszustatten (nicht gezeigt).

In Abstimmung auf die bevorzugten Schweißhilfsfügeteile 10 der Figuren 5 bis 8 sind die als Gegenlager wirkenden Matrizen 50 ausgestaltet. Die Matrizenkontur hat Einfluss auf die Ausbildung der Verbindung zwischen Schweißhilfsfügeteil 10 und dem mindestens einen ersten Bauteil 20. Dabei sollte man beachten, dass mit flacher werdender Matrizenkontur, d.h. mit abnehmender Tiefe der Vertiefung 52 der Matrize 50, der Hinterschnitt im Schaftbereich des Schweißhilfsfügeteils 10 zunimmt. Gleichzeitig steigt aber die erforderliche Fügeenergie, um eine Anlage des Kopfes 16 des Schweißhilfsfügeteils 10 am ersten Bauteil 20 zu realisieren. Mit zunehmender Tiefe der Matrizenkontur 52 steigt die Schweißeignung des in der Vertiefung 52 umgeformten Schweißhilfsfügeteils 10. Des Weiteren trägt eine tiefere Matrizenkontur 52 zu einer besseren Reproduzierbarkeit der Ausbildung der Schweißlinse 60 bei. Eine tiefere Matrizenkontur hat jedoch den Nachteil, dass das Schweißhilfsfügeteil 10 entsprechend länger ausgebildet sein muss.

Im Hinblick auf die Matrizenkontur, d.h. die Form der Vertiefung 52 hat sich gezeigt, dass der punktuelle Tiefenabsatz der Vertiefung 52 eine höhere Energiebündlung beim späteren Schweißen erzielt. Auf diese Weise ist eine effektivere Schweißinitialzündung möglich. Des Weiteren ist es bevorzugt, ein Minimum an Konturradien 56 in der Vertiefung 52 in der Matrize 50 vorzusehen. Durch die Reduktion der Konturradien wird der gleichmäßige Fluss des verdrängten Fügewerkstoffs unterstützt. Auf diese Weise wird vermieden, dass sich verdrängter Werkstoff am Schweißkopf 70 staut. Zudem ist es bevorzugt von Vorteil, einen möglichst großen Matrizeninnenradius zu wählen. Da sich daraus eine verminderte Steigung der Vertiefung 52 der Matrize 50 ergibt, ist eine Verdrängung von Material mit geringerem Energieaufwand möglich.

Erfindungsgemäß bevorzugt weist die Matrize 50 eine konkave Vertiefung 52 auf. Gemäß unterschiedlicher bevorzugter Ausführungsformen vorliegender Erfindung ist die konkave Vertiefung 52 unterschiedlich aufgebaut. Gemäß einer ersten bevorzugten Ausführungsform ist die konkave Vertiefung 52 kreisbogenförmig ausgebildet, wie es in den Figuren 6 bis 8 zu erkennen ist. Ein Matrizenradius $MR_1$, $MR_2$, $MR_3$, der seinen Ursprung auf der Mittelachse M der konkaven Vertiefung 52 hat, definiert die bevorzugt durchgehende oder zumindest in einem Teilbereich durchgehende Kreisbogenform der konkaven Vertiefung.

Gemäß einer weiteren bevorzugten Ausführungsform vorliegender Erfindung (siehe Figur 4) weist die konkave Vertiefung 52 zumindest in einem Teilbereich 55 eine kreisbogenförmige radiale Innenseite 54 oder Innenwand auf. Die Teilbereiche 55 sind ebenfalls durch den unten angegebenen jeweiligen Bereich des Matrizenradius MR, insbesondere den Matrizenradius $MR_{55}$ der Teilbereiche 55, definiert. Der Matrizenradius $MR_{55}$ der Teilbereiche 55 hat vorzugsweise seinen Ursprung in einem Punkt auf der Mittelachse M oder auf einer zur Mittelachse M parallel verlaufenden Geraden G. Vorzugsweise weist die konkave Vertiefung 52 zwei im vertikalen Schnittbild der konkaven Vertiefung 52 gemäß Figur 4 einander gegenüberliegend angeordnete kreisbogenförmige Teilbereiche 55 auf, die den Radius $MR_{55}$ oder $MR_{55}'$ aufweisen. In einer nicht dargestellten räumlichen Betrachtung der Matrize 50 mit der konkaven Vertiefung 52 liegen die Geraden G auf einer Zylinderfläche, die konzentrisch um die Mittelachse M angeordnet ist.

Durch entsprechend der Fügeaufgabe gestaltbare Verläufe des Matrizengrunds 58 sind die Teilbereiche 55 in Figur 4 vorzugsweise miteinander verbunden. Der Matrizengrund 58 ist gemäß unterschiedlicher Ausführungsformen eben, gewellt, kantig, gebogen oder anders geformt. Es ist weiterhin bevorzugt, in der radialen Innenseite 54 der konkaven Vertiefung 52 konzentrische Absätze auszuformen, die bspw. als Konturradien 56 erkennbar sind.

Im Folgenden werden die erfindungsgemäß bevorzugten Matrizen 50 und Verbindungsverfahren am Beispiel einer ganz oder teilweise durchgehend kreisförmig geformten konkaven Vertiefung 52 beschrieben, mit deren Hilfe das mindestens eine erste Bauteil 22 über das Schweißhilfsfügeteil 10 mit dem zweiten Bauteil 30 verbunden wird. In gleicher Weise ist an dieser Stelle auch eine Matrize 50 einsetzbar, deren konkave Vertiefung 52 im vertikalen Schnittbild der Matrize 50 kreisbogenförmige Teilbereiche 55 aufweist. In einem ersten Schritt I wird das Schweißhilfsfügeteil 10 in das mindestens eine erste Bauteil 20 gesetzt. Aufgrund der vorzugsweise aufeinander abgestimmten Formen des Spitzenbereichs 12 des Schweißhilfsfügeteils 10 und der Matrize 50 findet eine Verformung des Schweißhilfsfügeteils 10 in den Schweißkopf 70 statt (Schritt II). Nachfolgend wird der Schweißkopf 70 mit dem zweiten Bauteil 30 verschweißt (Schritt III).

Es hat sich als vorteilhaft und wirtschaftlich erwiesen, wenn das Schweißhilfsfügeteils 10 mit Hilfe eines Kaltschlagverfahrens mit den unten näher diskutierten geometrischen Formen hergesellt wird. Die verwendeten Matrizen 50 (siehe unten) werden ebenfalls mithilfe bekannter Verfahren in den unten diskutierten Geometrien ausgeformt (Schritt $H_m1$) und endbearbeitet (Schritt $H_m2$).

Die bevorzugte Ausführungsform gemäß Figur 4 zeigt den kegelförmigen Bereich 13 mit einer nicht-abgerundeten Spitze 11', die spitz bzw. scharf zuläuft. Der Spitzenbereich 13 weist einen Spitzenwinkel $SW_1$ im Bereich von $35° \leq SW_1 \leq 80°$ auf, vorzugsweise $45° \leq SW_1 \leq 70°$.

Es ist erfindungsgemäß bevorzugt, dass die Geometrien des Schweißhilfsfügeteils 10 und der Matrize 50 die folgende Bedingung erfüllen. Denn in diesem Fall wird sowohl der Setzvorgang des Schweißhilfsfügeteils in das erste Bauteil 20 sowie die Herausbildung eines für das spätere Schweißen geeigneten Schweißkopfes 70 unterstützt. Diese bevorzugten Geometriebedingungen des Schweißhilfsfügeteils 10 und der Matrize 50 lassen sich unter Bezugnahme auf den Spitzenwinkel $SW_1$ und den Matrizenwinkel MW folgendermaßen definieren:

$$0,4 \leq \frac{SW_1}{MW} \leq 1, \text{ insbesondere } 0,6 \leq \frac{SW}{MW_1} \leq 0,8.$$

Dieses Schweißhilfsfügeteil 10 mit nicht-abgerundeter Spitze 11 wird mithilfe einer Matrize 50' als Gegenlager gesetzt, die eine winklige Vertiefung 52' in Setzrichtung S aufweist. Die Vertiefung 52' ist kegelförmig ausgebildet mit einem Matrizenwinkel MW zwischen der Mittelachse M und einer radialen Innenseite 54' der Vertiefung 52'. Der Matrizenwinkel $MW_1$ liegt in dem Bereich von $70° \leq MW_1 \leq 90°$.

Es ist bevorzugt, wenn die sich während des Setzens einander gegenüberstehende Spitzengeometrie und die Matrizengeometrie zwischen sich einen Materialverdrängungsspalt bilden, durch den Material des mindestens einen ersten Bauteils 20 radial auswärts verdrängt werden kann. Es versteht sich, dass die Größe dieses Spalts nur zum Zeitpunkt des Auftreffens des Schweißhilfsfügeteils auf der Matrize, also noch vor der Deformation des Spitzenbereichs 12 des Schweißhilfsfügeteils an der Matrize 50, beurteilt werden kann. Denn mit der Deformation des Schweißhilfsfügeteils 10 an der Matrize 50 ist dieser Materialverdrängungsspalt einer ständigen Veränderung unterworfen. Ein derartiger Materialverdrängungsspalt bildet sich aus, sofern eine Differenz des Matrizenwinkels MW und des Spitzenwinkels $SW_1$ des Schweißhilfsfügeteils 10 bevorzugt folgende Bedingung erfüllt: $MW - SW_1 \geq 10°$.

Werden vorzugsweise die zuvor genannten Verhältnisbereiche mit einer oder mit mehreren der oben genannten geometrischen Bedingungen kombiniert und die ausgewählten Bedingungen kumulativ erfüllt, dann ergeben sich weitere bevorzugte Ausführungsformen vorliegender Erfindung.

Gemäß der in Figur 6 gezeigten bevorzugten Ausführungsform erfüllen der Spitzenradius $SR_1$ des kalottenförmigen Schweißhilfsfügeteils 10 und der Matrizenradius $MR_1$ der konkaven, vorzugsweise kreisbogenförmigen, Vertiefung 52 der Matrize 50 folgende Verhältnisgleichung:

$$0{,}01 \leq \frac{SR_1}{MR_1} \leq 0{,}5 \text{ , insbesondere } 0{,}03 \leq \frac{SR_1}{MR_1} \leq 0{,}3.$$

Dabei ist der Matrizenradius $MR_1$ vorzugsweise ausgewählt aus dem Bereich von $1 \text{ mm} \leq MR_1 \leq 60 \text{ mm}$. Auch in dieser bevorzugten Ausführungsform vorliegender Erfindung sind die bevorzugten Kreisbögen der Spitze 11" des Schweißhilfsfügeteils 10 und der konkaven, vorzugsweise kreisbogenförmigen, Vertiefung 52 der Matrize 50 derart aufeinander abgestimmt, dass sich zwischen beiden noch vor dem Verformen des Schweißhilfsfügeteils 10 an der Matrize 50 ein vorteilhafter Materialverdrängungsspalt ausbildet. Die Ausbildung des Materialverdrängungsspalts wird bevorzugt unterstützt, wenn der Matrizenradius $MR_1$ das doppelte des Spitzenradius $SR_1$ erreicht oder übersteigt, d.h. $MR_1 \geq 2 \cdot SR_1$.

Gemäß einer weiteren bevorzugten Ausführungsform vorliegender Erfindung, konnte das Setzergebnis des Schweißhilfsfügeteils und die Ausformung des Schweißkopfes 70 weiter verbessert werden. Zu diesem Zweck wurde der Matrizenradius $MR_1$ aus dem Bereich $20 \text{ mm} \leq MR_1 \leq 40 \text{ mm}$ und der Spitzenradius $SR_1$ aus dem Bereich $1 \text{ mm} \leq SR_1 \leq 1{,}5 \text{ mm}$ ausgewählt.

Ein weiteres erfindungsgemäßes Verbindungsverfahren wird anhand von Figur 7 veranschaulicht. Vor dem Schweißen wird hier zunächst das dargestellte bevorzugte Schweißhilfsfügeteil 10 gegen die ebenfalls bevorzugte Matrizenform gesetzt. Das Schweißhilfsfügeteil 10 umfasst den nicht dargestellten Kopf 16, den optionalen Schaft 14, den kegelförmigen Spitzenbereich 12 mit dem Spitzenwinkel $SW_2$ sowie eine abgerundete Spitze 11. Die abgerundete Spitze 11 ist durch den Spitzeradius $SR_2$ definiert. Dabei sitzt der Mittelpunkt des Kreisbogens der Spitze 11 auf der Mittelachse M.

Die konkave, vorzugsweise kreisbogenförmige, Vertiefung 52 der Matrize 50 ist an ihrem tiefsten Punkt durch den Matrizenradius $MR_2$ definiert. Auch hier liegt der Mittelpunkt des Kreisbogens vorzugsweise auf der Mittelachse M.

Beim Setzen des Schweißhilfsfügeteils 10 in das mindestens eine erste Bauteil 20 und gegen die in Figur 7 gezeigte Matrize 50 bildet sich der ebenfalls oben bereits diskutierte Materialverdrängungsspalt aus, wenn folgende Bedingung erfüllt ist:

$$0{,}01 \leq \frac{SR_2}{MR_1} \leq 1 \text{ , insbesondere } 0{,}1 \leq \frac{SR_2}{MR_1} \leq 0{,}6.$$

In diesem Zusammenhang ist es besonders bevorzugt, wenn die konkave, vorzugsweise kreisbogenförmige, Vertiefung 52 der Matrize 50 den Matrizenradius MR im Bereich von $1{,}5 \text{ mm} \leq MR \leq 5 \text{ mm}$ aufweist. Des Weiteren kann man anhand der Darstellung der bevorzugten Ausführungsform in Figur 7 erkennen, dass sich die konkave, vorzugsweise kreisbogenförmige, Vertiefung 52 der Matrize 50 in einem umlaufenden, konvex geformten Bereich entgegen der Setzrichtung S öffnet. Insbesondere ist dieser umlaufende konvexe Bereich durch einen äußeren Matrizenradius $MR_a$ im Bereich von $15 \text{ mm} \leq MR_a \leq 40 \text{ mm}$ definiert.

Die hier bevorzugt eingesetzte Matrizenform erzeugt einen sich stark in Fügerichtung verjüngenden Schweißbuckel mit kleiner Kontaktfläche in Setzrichtung S. Diese Form des Schweißbuckels hat den Vorteil, dass er gerade beim Lichtbogenschweißen und Buckelschweißen die Schweißinitiierung erleichtert.

Im Hinblick auf den auch in dieser erfindungsgemäßen Ausgestaltung genutzten Materialverdrängungsspalt ist es bevorzugt, wenn der Spitzenradius $SR_2$ und der Matrizenradius MR folgende Bedingung erfüllen: $MR_2 \geq 2 \cdot SR_2$. In diesem Zusammenhang ist es weiter bevorzugt, wenn der Spitzenradius $SR_2$ im Bereich von 0,1 mm $\leq SR_2 \leq$ 1,5 mm liegt. Besonders bevorzugt wird der Spitzenradius $SR_2$ im Bereich von 0,8 mm $\leq SR_2 \leq$ 1,2 mm mit einem Spitzen-winkel $SW_2$ im Bereich von 35° $\leq SW_2 \leq$ 80°, vorzugsweise 45° $\leq SW_2 \leq$ 70° und insbesondere $SW_2$= 55° kombiniert.

Figur 8 veranschaulicht ein weiteres alternatives Verbindungsverfahren, bei dem das Schweißhilfsfügeteil 10 gemäß Figur 7 gegen eine konkave, vorzugsweise kreisbogenförmige, Matrize 50 mit einem Matrizenradius $MR_3$ von 1,0 mm $\leq MR_3 \leq$ 60 mm gesetzt wird. Das nachfolgende Schweißen wird unterstützt, wenn während des Setzvorgangs die folgenden Geometrievorgaben im Hinblick auf das Schweißhilfsfügeteil 10 und die Matrizenvertiefung 52 erfüllt sind:

$$0{,}001 \leq \frac{SR_3}{MR_3} \leq 0{,}1 \text{, insbesondere } 0{,}002 \leq \frac{SR_3}{MR_3} \leq 0{,}08.$$

Vorzugsweise wird die geeignete Materialverdrängung und Ausbildung eines gewünschten Schweißkopfes 70 beim Setzen des Schweißhilfsfügeteils 10 dadurch unterstützt, dass der Spitzenradius $SR_3$ und der Matrizenradius $MR_3$ das folgende Verhältnis zueinander erfüllen: $MR_3 \geq 2\, SR_3$. In diesem Zusammenhang werden vorzugsweise der Matrizenradius $MR_3$ aus dem Bereich 20 mm $\leq MR_3 \leq$ 40 mm und der Spitzenradius $SR_3$ aus dem Bereich 0,1 $\leq SR_3 \leq$ 1,5 mm ausgewählt.

In einer weiteren bevorzugten Ausgestaltung des hier beschriebenen Verfahrens weist das Schweißhilfsfügeteil 10 einen kegelstumpfförmigen Bereich 12 auf, der zwischen der abgerundeten Spitze 11 und dem Kopf 16 des Schweißhilfsfügeteil angeordnet ist. Dieser kegelstumpfförmige Bereich 12 zeichnet sich durch einen Spitzenwinkel $SW_3$ im Bereich von 35° $\leq$ SW $\leq$ 80° aus.

Da die Matrize 50 gemäß Figur 8 vorzugsweise einen größeren Matrizenradius MR aufweist als die konvex auslaufende Matrize der Figur 7, entsteht eine größere Kontaktfläche am deformierten Schweißhilfsfügeteil 10 für das nachfolgende elektrische Verschweißen mit dem zweiten Bauteil 30. In diesem Zusammenhang ist es besonders bevorzugt, wenn 0,8 mm $\leq SR_3 \leq$ 1,2 mm, SW = 55° sowie $MR_3$ = 30 mm.

Es ist ebenfalls bevorzugt, die Matrize 50 der oben beschriebenen Alternativen mit einer ähnlich tiefen aber elliptisch geformten Vertiefung 52 auszustatten.

6. Bezugszeichenliste

| | |
|---|---|
| 10 | Schweißhilfsfügeteil |
| 11 | Spitze |
| 12 | Spitzenbereich des Schweißhilfsfügeteils |
| 13 | kegelförmiger Bereich |
| 14 | Schaft |
| 16 | Kopf |
| 20,22 | erstes Bauteil |
| 30 | zweites Bauteil |
| 50 | Matrize |
| 52 | Vertiefung |
| 54 | Radiale Innenseite |
| 55 | Teilbereich |
| 56 | Konturradius |
| 58 | Matrizengrund |
| 60 | Schweißlinse |
| 64, 66 | Schweißelektroden |
| 70 | Schweißkopf |
| M | Mittelachse |
| G | Gerade parallel zur Mittelachse |
| SR | Spitzenradius |
| SW | Spitzenwinkel |
| MW | Matrizenwinkel |
| MR | Matrizenradius |
| S | Setzrichtung |

v        Geschwindigkeit

**Patentansprüche**

1. Schweißhilfsfügeteil (10) zum Setzen in mindestens ein erstes Bauteil (20) aus schlecht-schweißbarem Material in Kombination mit einer Matrize (50) und zum nachfolgenden Verschweißen mit mindestens einem zweiten Bauteil (30) aus schweißbarem Material, wobei das Schweißhilfsfügeteil (10) die folgenden Merkmale aufweist:

   a. einen Kopf (16) und
   b. eine abgerundete Spitze (11), die kreisbogenförmig um einen Punkt auf einer Längsachse des Schweißhilfsfügeteils ausgebildet ist, wobei die abgerundete Spitze (11) einen Spitzenradius $SR_1$ im Bereich von $0,5\,mm \leq SR_1 \leq 8\,mm$ aufweist, so dass ein Materialverdrängungsverhalten durch das Schweißhilfsfügeteil im Material des ersten Bauteils (20) realisierbar ist.

2. Schweißhilfsfügeteil (10) zum Setzen in mindestens ein erstes Bauteil (20) aus schlecht schweißbarem Material in Kombination mit einer Matrize (50) und zum nachfolgenden Verschweißen mit mindestens einem zweiten Bauteil (30) aus schweißbarem Material, wobei das Schweißhilfsfügeteil (10) die folgenden Merkmale aufweist:

   a. einen Kopf (16) und
   b. eine abgerundete Spitze (11), die kreisbogenförmig um einen Punkt auf einer Längsachse des Schweißhilfsfügeteils ausgebildet ist, wobei die abgerundete Spitze (11) einen Spitzenradius $SR_2$ im Bereich von $0,1\,mm \leq SR_2 \leq 2,5\,mm$ aufweist, so dass ein Materialverdrängungsverhalten durch das Schweißhilfsfügeteil im Material des ersten Bauteils (20) realisierbar ist.

3. Schweißhilfsfügeteil (10) gemäß einem der vorhergehenden Ansprüche, das einen kegelstumpfförmigen Bereich (13) aufweist, der zwischen der abgerundeten Spitze (11) und dem Kopf (16) angeordnet ist und sich in Richtung Kopf aufweitet.

4. Schweißhilfsfügeteil (10) gemäß einem der vorhergehenden Ansprüche, das einen Schaft (14) aufweist, wobei eine Außenfläche der abgerundeten Spitze in eine Mantelfläche des Schafts oder in den kegelstumpfförmigen Bereich (13) übergeht.

5. Schweißhilfsfügeteil (10) gemäß Anspruch 4, dessen kegelstumpfförmiger Bereich (13) einen Spitzenwinkel SW zwischen einer Mittelachse und einer Kegelmantelfläche im Bereich von $35° \leq SW \leq 80°$ aufweist.

6. Matrize (50) zum Setzen eines Schweißhilfsfügeteils (10) gemäß einem der vorhergehenden Ansprüche, die die folgenden Merkmale aufweist:

   a. eine konkave Vertiefung (52), deren Innenwand zumindest in einem Teilbereich, vorzugsweise durchgehend, kreisbogenförmig ausgebildet ist mit einem Matrizenradius MR im Bereich von $1\,mm \leq MR \leq 8$.

7. Matrize (50) nach Anspruch 6, in der

   a. der Matrizenradius MR einen Ursprung in einem Punkt auf einer Mittelachse der konkaven Vertiefung (52) bei einer durchgehend kreisbogenförmigen Vertiefung aufweist oder in der
   b. der Matrizenradius in Bezug auf den zumindest einen Teilbereich einen Ursprung in einem Punkt auf

      b1. der Mittelachse oder
      b2. mindestens einer zur Mittelachse der konkaven Vertiefung parallel verlaufenden Geraden (G) aufweist.

8. Matrize (50) gemäß Anspruch 6, deren konkave Vertiefung (52) den Matrizenradius MR im Bereich von $1\,mm \leq MR \leq 8\,mm$ aufweist, wobei sich die konkave Vertiefung in einem umlaufenden konvexen Bereich öffnet.

9. Matrize (50) nach Anspruch 8, in der der konvexe Bereich kreisbogenförmig ausgebildet ist und einen Außenradius $MR_a$ im Bereich von $10\,mm \leq MR_a \leq 50\,mm$ aufweist.

10. Matrize (50) zum Setzen eines Schweißhilfsfügeteils (10) gemäß einem der Ansprüche 1 bis 5, die die folgenden Merkmale aufweist:

a. eine konkave Vertiefung (52), deren Innenwand zumindest in einem Teilbereich kreisbogenförmig ausgebildet ist mit einem Matrizenradius MR im Bereich von 1 mm ≤ MR ≤ 60 mm oder 10 mm ≤ MR ≤ 60 mm, wobei
b. die konkave Vertiefung (52) mittig einen Matrizengrund (58) aufweist, der eben, gewellt oder kantig ist und an den sich der kreisbogenförmige Teilbereich anschließt.

11. Matrize (50) nach Anspruch 10, in der der Matrizenradius in Bezug auf den zumindest einen Teilbereich einen Ursprung in einem Punkt auf

a1. der Mittelachse oder
a2. mindestens einer zur Mittelachse der konkaven Vertiefung (52) parallel verlaufenden Geraden (G) aufweist.

12. Matrize (50) zum Setzen eines Schweißhilfsfügeteils (10) gemäß einem der Ansprüche 1 bis 5, die die folgenden Merkmale aufweist:

a. eine konkave Vertiefung (52), deren Innenwand zumindest in einem Teilbereich kreisbogenförmig ausgebildet ist mit einem Matrizenradius MR im Bereich von 1 mm ≤ MR ≤ 60 mm oder 10 mm ≤ MR ≤ 60 mm, wobei
b. der Matrizenradius in Bezug auf den zumindest einen Teilbereich einen Ursprung in einem Punkt auf mindestens einer zur Mittelachse der konkaven Vertiefung parallel verlaufenden Geraden (G) aufweist.

13. Verbindungsverfahren für ein Schweißhilfsfügeteil (10) mit einem Kopf (16) und einer abgerundeten Spitze (11), insbesondere ein Schweißhilfsfügeteil gemäß einem der Ansprüche 1 bis 5, zum Setzen in mindestens ein erstes Bauteil (20) mit einer Matrize (50) als Gegenlager, die eine konkave Vertiefung (52) mit einer zumindest in einem Teilbereich kreisbogenformigen Innenwand mit einem Matrizenradius MR im Bereich von 1,0 mm ≤ MR ≤ 60 mm aufweist, zur Vorbereitung eines nachfolgenden Schweißverfahrens, wobei das Verbindungsverfahren die folgenden Schritte umfasst:
Setzen des Schweißhilfsfügeteils (10) in das mindestens eine erste Bauteil (20) aus schlecht-schweißbarem Material und gegen die Matrize (50), wobei zwischen einer Spitzengeometrie des Schweißhilfsfügeteils und einer Matrizengeometrie ein Materialverdrängungsspalt vorgesehen ist, wenn folgende Bedingungen erfüllt sind:

$$0,001 \leq \frac{SR}{MR} \leq 0,1 \text{, insbesondere } 0,002 \leq \frac{SR}{MR} \leq 0,08 \text{,}$$

wobei SR einen Spitzenradius der abgerundeten Spitze des Schweißhilfsfügeteils bezeichnet.

14. Verbindungsverfahren gemäß Anspruch 13, wobei der Spitzenradius SR und der Matrizenradius MR in folgendem Verhältnis zueinander stehen: MR ≥ 2 • SR und/oder wobei der Matrizenradius MR aus dem Bereich 20 mm ≤ MR ≤ 40 mm und der Spitzenradius SR aus dem Bereich 0,1 mm ≤ SR ≤ 1,5 mm ausgewählt ist.

15. Verbindungsverfahren gemäß einem der Ansprüche 13 bis 14, wobei das Schweißhilfsfügeteil einen kegelstumpfförmigen Bereich (13) aufweist, der zwischen der abgerundeten Spitze (11) und dem Kopf (16) angeordnet ist, der sich in Richtung Kopf aufweitet und der einen Spitzenwinkel SW zwischen einer Mittelachse des kegelstumpfförmigen Bereichs und einer Kegelmantelfläche im Bereich von 35° ≤ SW ≤ 80° aufweist.

16. Verbindungsverfahren für ein Schweißhilfsfügeteil (10) mit einem Kopf (16) und einer abgerundeten Spitze (11), insbesondere ein Schweißhilfsfügeteil gemäß einem der Ansprüche 1 bis 5, zum Setzen in mindestens ein erstes Bauteil (20) aus schlecht-schweißbarem Material mit einer Matrize (50) als Gegenlager, die eine konkave Vertiefung (52) mit einer zumindest in einem Teilbereich kreisbogenförmigen Innenwand mit einem Matrizenradius MR im Bereich von 1,0 mm ≤ MR ≤ 60 mm aufweist, zur Vorbereitung eines nachfolgenden Schweißverfahrens, wobei das Verbindungsverfahren die folgenden Schritte umfasst:
Setzen des Schweißhilfsfügeteils (10) in das mindestens eine erste Bauteil (20) und gegen die Matrize (50), wobei zwischen einer Spitzengeometrie des Schweißhilfsfügeteils und einer Matrizengeometrie ein Materialverdrängungsspalt vorgesehen ist, wenn folgende Bedingungen erfüllt sind:

$$0{,}01 \le \frac{SR}{MR} \le 1 \text{, insbesondere } 0{,}1 \le \frac{SR}{MR} \le 0{,}6 \text{,}$$

wobei SR einen Spitzenradius der abgerundeten Spitze des Schweißhilfsfügeteils bezeichnet.

17. Verbindungsverfahren gemäß Anspruch 16, wobei die Matrize (50) eine konkave Vertiefung (52) mit dem Matrizenradius MR im Bereich von 1,5 mm ≤ MR ≤ 5 mm aufweist, wobei sich die kreisbogenförmige Vertiefung mit einer zumindest in einem Teilbereich kreisbogenförmigen Innenwand in einem umlaufenden konvexen Bereich öffnet, insbesondere mit einem äußeren Matrizenradius im Bereich von 15 mm ≤ $MR_a$ ≤ 40 mm.

18. Verbindungsverfahren gemäß Anspruch 16 oder 17, wobei der Spitzenradius SR und der Matrizenradius MR in folgendem Verhältnis zueinander stehen: MR ≥ 2 • SR und/oder wobei der Matrizenradius MR den Bereich 1,5 mm ≤ MR ≤ 5 mm und der Spitzenradius SR einen Bereich von 0,1 mm ≤ SR ≤ 1,5 mm umfasst.

19. Verbindungsverfahren gemäß einem der Ansprüche 16 bis 18, wobei das Schweißhilfsfügeteil (10) einen kegelstumpfförmigen Bereich (13) aufweist, der zwischen der abgerundeten Spitze (11) und dem Kopf (16) angeordnet ist, der sich in Richtung Kopf aufweitet und der einen Spitzenwinkel SW zwischen einer Mittelachse des kegelstumpfförmigen Bereichs und einer Kegelmantelfläche im Bereich von 35° ≤ SW ≤ 80° aufweist.

20. Verbindungsverfahren für ein Schweißhilfsfügeteil (10) mit einem Kopf (16) und einer abgerundeten Spitze (11), insbesondere ein Schweißhilfsfügeteil (10) gemäß einem der Ansprüche 1 bis 5, zum Setzen in mindestens ein erstes Bauteil (20) aus schlecht-schweißbarem Material mit einer Matrize (50) als Gegenlager, die eine konkave Vertiefung (52) mit einer zumindest in einem Teilbereich kreisbogenförmigen Innenwand mit einem Matrizenradius MR im Bereich von 1,0 mm ≤ MR ≤ 60 mm aufweist, zur Vorbereitung eines nachfolgenden Schweißverfahrens, wobei das Verbindungsverfahren die folgenden Schritte umfasst:
Setzen des Schweißhilfsfügeteils (10) in das mindestens eine erste Bauteil (20) und gegen die Matrize (50), wobei zwischen einer Spitzengeometrie des Schweißhilfsfügeteils und einer Matrizengeometrie ein Materialverdrängungsspalt vorgesehen ist, wenn folgende Bedingungen erfüllt sind:

$$0{,}01 \le \frac{SR}{MR} \le 0{,}5 \text{, insbesondere } 0{,}03 \le \frac{SR}{MR} \le 0{,}3 \text{,}$$

wobei SR einen Spitzenradius der abgerundeten Spitze des Schweißhilfsfügeteils bezeichnet.

21. Verbindungsverfahren gemäß Anspruch 20, wobei der Spitzenradius SR und der Matrizenradius MR in folgendem Verhältnis zueinander stehen: MR ≥ 2 • SR und/oder wobei der Matrizenradius MR den Bereich 20 mm ≤ MR ≤ 40 mm und der Spitzenradius SR den Bereich 1 mm ≤ SR ≤ 1,5 mm umfasst.

22. Verbindungsverfahren für ein Schweißhilfsfügeteil (10) mit einem Kopf (16) und einer Spitze (11) zum Setzen in mindestens ein erstes Bauteil (20) aus schlecht-schweißbarem Material mit einer Matrize (50) als Gegenlager, die eine Vertiefung (52) mit einem Matrizenwinkel MW zwischen einer Mittelachse der Vertiefung und einer Innenwand der Vertiefung aufweist, zur Vorbereitung eines nachfolgenden Schweißverfahrens, wobei das Verbindungsverfahren die folgenden Schritte umfasst:
Setzen des Schweißhilfsfügeteils in das mindestens eine erste Bauteil und gegen die Matrize, wobei zwischen dem Schweißhilfsfügeteil und der Matrize ein Materialverdrängungsspalt vorgesehen ist, wenn folgende Bedingung erfüllt ist:

$$0{,}4 \le \frac{SW_1}{MW} \le 1{,}0 \text{, insbesondere } 0{,}6 \le \frac{SW}{MW_1} \le 0{,}8 \text{,}$$

wobei SW einen Spitzenwinkel der Spitze des Schweißhilfsfügeteils gemessen zwischen der Mittelachse und der Außenseite des Schweißhilfsfügeteils bezeichnet.

23. Verbindungsverfahren gemäß Anspruch 22, wobei die Matrize (50) eine winklige Vertiefung (52') mit dem Matrizenwinkel MW im Bereich von 70 ° ≤ MW ≤ 90 ° aufweist und/oder wobei der Spitzenwinkel SW und der Matrizenwinkel MW in folgendem Verhältnis zueinander stehen: MW - SW $\geq$ 10 °.

24. Verbindungsverfahren gemäß einem der Ansprüche 22 bis 23, wobei der Spitzenwinkel SW einen Bereich von 35 ° $\leq$ SW $\leq$ 80 ° umfasst.

25. Verbindungsverfahren gemäß einem der Ansprüche 22 bis 24, wobei das Schweißhilfsfügeteil (10) einen kegelförmigen Bereich (13) aufweist, der zwischen der Spitze (11) und dem Kopf (16) angeordnet ist und sich in Richtung Kopf aufweitet, und der kegelförmige Bereich den Spitzenwinkel SW zwischen der Mittelachse und einer Kegelmantelfläche aufweist.

26. Verbindungsverfahren gemäß einem der vorhergehenden Ansprüche 13 bis 25, mit dem weiteren Schritt: Verschweißen des ersten Bauteils (20) mit Schweißhilfsfügeteil (10) mit einem zweiten Bauteil (30) aus schweißbarem Material.

27. Verbindungsverfahren gemäß einem der vorhergehenden Ansprüche 13 bis 26, in dem das Schweißhilfsfügeteil (10) beim Setzen auf eine Geschwindigkeit im Bereich von 1 m/s $\leq$ v $\leq$ 40 m/s beschleunigt wird, vorzugsweise 1 m/s bis einschließlich 5 m/s oder 10 m/s $\leq$ v $\leq$ 40 m/s.

**Claims**

1. A welding auxiliary joining part (10) to be set in at least a first component (20) of poorly weldable material in combination with a die (50) and for the subsequent welding to at least a second component (30) of a weldable material, wherein the welding auxiliary joining part (10) comprises the following features:

   a. a head (16) and
   b. a rounded tip (11), which is arc-shaped around a point on a longitudinal axis of the welding auxiliary joining part, wherein the rounded tip (11) comprises a tip radius $SR_1$ in the range of 0.5 mm $\leq$ $SR_1$ $\leq$ 8 mm so that a material displacement behavior is realizable in the material of the first component (20) by the welding auxiliary joining part.

2. Welding auxiliary joining part (10) to be set in at least a first component (20) of poorly weldable material in combination with a die (50) and for the subsequent welding to at least a second component (30) of a weldable material, wherein the welding auxiliary joining part (10) comprises the following features:

   a. a head (16) and
   b. a rounded tip (11), which is arc-shaped around a point on a longitudinal axis of the welding auxiliary joining part (10), wherein the rounded tip (11) comprises a tip radius $SR_2$ in the range of 0.1 mm $\leq$ $SR_2$ $\leq$ 2.5 mm so that a material displacement behavior is realizable in the material of the first component (20) by the welding auxiliary joining part (10).

3. The welding auxiliary joining part (10) according to one of the preceding claims, comprising a cone-shaped portion (13), which is positioned between the rounded tip (11) and the head (16) and which extends towards the head.

4. The welding auxiliary joining part (10) according to one of the preceding claims, comprising a shank (14), wherein an outer surface of the rounded tip merges into a lateral surface of the shank or into the cone-shaped portion (13).

5. The welding auxiliary joining part (10) according to claim 4, wherein said cone-shaped portion (13) has a tip angle SW between a central axis and a lateral cone surface in the range of 35° $\leq$ SW $\leq$ 80°.

6. A die (50) for setting a welding auxiliary joining part (10) according to one of the preceding claims, comprising the following features:

   a. a concave recess (52) with an inner wall being formed at least partially, preferably continuously, arc-shaped with a die radius MR in the range of 1 mm $\leq$ MR $\leq$ 8.

7. The die (50) according to claim 6, in which

a. the die radius MR comprises an origin in a point on a central axis of the concave recess (52) at a continuous arc-shaped recess or in which
b. the die radius comprises with respect to at least a partial portion an origin in a point on

      b1. the central axis, or
      b2. at least a straight line (G) parallel to the concave recess (52) of the central axis.

8.    The die (50) according to claim 6, the concave recess (52) of which comprises the die radius MR in the range of 1mm ≤ MR ≤ 8 mm, wherein the concave recess opens in a circumferential convex portion.

9.    The die (50) according to claim 8, in which the convex portion is arc-shaped and comprises an outer radius $MR_a$ in the range of 10 mm ≤ $MR_a$ ≤ 50 mm.

10.  A die (50) for setting a welding auxiliary joining part (10) according to one of the claims 1 to 5 comprising the following features:

    a. a concave recess (52) with an inner wall being formed at least partially arc shaped with a die radius MR in the range of 1 mm ≤ MR ≤ 60 mm or 10 mm ≤ MR ≤ 60 mm, wherein
    b. the concave recess (52) includes a die base (58) which is flat, corrugated or angled and to which the arc-shaped partial portion connects.

11.  The die (50) according to claim 10 in which the die radius comprises with respect to at least a partial portion an origin in a point on

    a1. the central axis, or
    a2. at least a straight line (G) parallel to the concave recess (52) of the central axis.

12.  A die (50) for placing a welding auxiliary joining part (10) according to one of the claims 1 to 5 comprising the following features:

    a. a concave recess (52) with an inner wall being formed at least partially arc shaped with a die radius MR in the range of 1 mm ≤ MR ≤ 60 mm or 10 mm ≤ MR ≤ 60 mm, wherein
    b. the die radius, with respect to at least a partial portion, includes an origin in one point on at least a straight line (G) running parallel to the central axis of the concave recess (52).

13.  A connection method for a welding auxiliary joining part (10) with a head (16) and a rounded tip (11), in particular a welding auxiliary joining part (10) according to one of the claims 1 to 5 for setting in at least a first component (20) with a die (50) as a counter-bearing having a concave recess (52) with an arc-shaped inner wall in at least a partial portion with a die radius MR in the range of 1.0 mm ≤ MR ≤ 60 mm for preparing a subsequent welding method with the connection method comprising the following steps:
setting the welding auxiliary joining part (10) in the at least one first component of a poorly weldable material and against the die (50), wherein there is a material displacement gap provided between a tip geometry of the welding auxiliary joining part and the die geometry, if the following conditions are fulfilled:

$$0.001 \leq \frac{SR}{MR} \leq 0.1, \text{ in particular } 0.002 \leq \frac{SR}{MR} \leq 0.08,$$

wherein SR denotes a tip radius of the rounded tip of the welding auxiliary joining part.

14.  The connection method according to claim 13, wherein the tip radius SR and the die radius MR show the following ratio: MR ≥ 2 · SR and/or wherein the die radius MR is selected from the range 20 mm ≤ MR ≤ 40 mm and the tip radius SR is selected from the range 0.1 mm ≤ SR ≤ 1.5 mm.

15.  The connection method according to one of the claims 13 to 14, wherein the welding auxiliary joining part (10) has a cone-shaped portion (13), which is positioned between the rounded tip (11) and the head (16), which widens towards the head and which comprises a tip angle SW between a center axis of the cone-shaped portion and a lateral cone surface in the range of 35° ≤ SW ≤ 80°.

16. A connection method for a welding auxiliary joining part (10) with a head (16) and a rounded tip (11), in particular a welding auxiliary joining part according to one of the claims 1 to 5 for setting in at least a first component (20) of poorly weldable material with a die (50) as a counter-bearing having a concave recess (52) with an arc-shaped inner wall at least in a partial portion thereof, wherein said die (50) has a die radius MR in the range of $1.0 \text{ mm} \leq MR \leq 60 \text{ mm}$ for preparing a subsequent welding method, wherein the connection method comprises the steps of: setting the welding auxiliary joining part (10) in the at least one first component (20) and against the die (50), wherein there is a material displacement gap provided between a tip geometry of the welding auxiliary joining part and a die geometry, if the following conditions are fulfilled:

$$0.01 \leq \frac{SR}{MR} \leq 1, \text{ in particular } 0.1 \leq \frac{SR}{MR} \leq 0.6,$$

wherein SR denotes a tip radius of the rounded tip (11) of the welding auxiliary joining part (10).

17. The connection method according to claim 16, wherein the die (50) has a concave recess (52) with the die radius MR in the range of $1.5 \text{ mm} \leq MR \leq 5 \text{ mm}$, wherein the arc-shaped recess having an at least partial arc-shaped inner wall opens in a circumferential convex region, in particular with an outer die radius in the range of $15 \text{ mm} \leq MR_a \leq 40 \text{ mm}$.

18. The connection method according to claim 16 or 17, wherein the tip radius SR and the die radius MR show the following ratio: $MR \geq 2 \cdot SR$ and/or wherein the die radius MR comprises the range of $1.5 \text{ mm} \leq MR \leq 5 \text{ mm}$ and the tip radius SR comprises a range of $0.1 \text{ mm} \leq SR \leq 1.5 \text{ mm}$

19. The connection method according to one of the claims 16 to 18, wherein the welding auxiliary joining part (10) has a cone-shaped portion (13) which is positioned between the rounded tip (11) and the head (16), which opens towards the head and which comprises a tip angle SW between a center axis of the cone-shaped portion and a lateral conical surface in the range of $35° \leq SW \leq 80°$.

20. A connection method for a welding auxiliary joining part (10) with a head (16) and a rounded tip (11), in particular a welding auxiliary joining part (10) according to one of the claims 1 to 5, for setting in at least a first component (20) of poorly weldable material with a die (50) as a counter-bearing comprising a concave recess (52) with an inner wall arc-shaped in at least a partial portion with a die radius MR in the range of $1.0 \text{ mm} \leq MR \leq 60 \text{ mm}$, for preparing a subsequent welding method, wherein the connection method comprises the following steps: setting the welding auxiliary joining part (10) in the at least one first component (20) and against the die (50), wherein there is a material displacement gap provided between a tip geometry of the welding auxiliary joining part (10) and the die geometry, if the following conditions are fulfilled:

$$0.01 \leq \frac{SR}{MR} \leq 0.5, \text{ in particular } 0.03 \leq \frac{SR}{MR} \leq 0.3,$$

wherein SR denotes a tip radius of the rounded tip (11) of the welding auxiliary joining part.

21. The connection method according to claim 20, wherein the tip radius SR and the die radius MR show the following ratio: $MR \geq 2 \cdot SR$ and/or wherein the die radius MR comprises the range of $20 \text{ mm} \leq MR \leq 40 \text{ mm}$ and the tip radius SR comprises the range of $1 \text{ mm} \leq SR \leq 1.5 \text{ mm}$

22. A connection method for a welding auxiliary joining part (10) with a head (16) and a tip (11) for setting in at least a first component (20) of poorly weldable material with a die (50) as a counter-bearing, which has a recess (52) with a die angle MW between a central axis of the recess and an inner wall of the recess, for preparing a subsequent welding method, the connection method comprising the following steps: setting the welding auxiliary joining part in the at least one first component and against the die, wherein there is a material displacement gap provided between the welding auxiliary joining part and the die, if the following conditions are fulfilled:

$$0.4 \le \frac{SW_1}{MW} \le 1.0, \text{ in particular } 0.6 \le \frac{SW}{MW_1} \le 0.8,$$

wherein SW denotes a tip angle of the tip of the welding auxiliary joining part measured between the central axis and the outer surface of the welding auxiliary joining part.

23. The connection method according to claim 22, wherein the die (50) has an angled recess (52') with the die angle MW in the range of $70° \le MW \le 90°$ and/or wherein the tip angle SW and the die angle MW show the following ratio: MW - SW $\ge 10°$.

24. The connection method according to one of the claims 22 to 23, wherein the tip angle SW comprises a range of $35° \le SW \le 80°$.

25. The connection method according to one of the claims 22 to 24, wherein the welding auxiliary joining part (10) has a conical region (13), which is positioned between the tip (11) and the head (16) and which expands towards the head, and the conical portion having the tip angle SW between the central axis and a lateral conical surface.

26. The connection method according to one of the preceding claims 13 to 25, comprising the further step of:
welding the first component (20) having the welding auxiliary joining part (10) to a second component (30) made of weldable material.

27. The connection method according to one of the preceding claims 13 to 26, in which the welding auxiliary joining part (10) is accelerated when being set to a speed in the range of 1 m/s $\le$ v $\le$ 40 m/s, preferably 1 m/s to including 5 m/s or 10 m/s $\le$ v $\le$ 40 m/s.

**Revendications**

1. Pièce de jonction d'aide au soudage (10) destinée à être posée dans au moins un premier composant (20) constitué d'un matériau difficilement soudable en combinaison avec une matrice (50) et servant au soudage consécutif avec au moins un deuxième composant (30) constitué d'un matériau soudable, la pièce de jonction d'aide au soudage (10) présentant les caractéristiques suivantes :

    a. une tête (16) et
    b. une pointe arrondie (11), laquelle est conçue en forme d'arc de cercle autour d'un point sur un axe longitudinal de la pièce de jonction d'aide au soudage, la pointe arrondie (11) présentant un rayon de pointe $SR_1$ dans la plage de 0,5 mm $\le SR_1 \le$ 8 mm, de sorte qu'un comportement de refoulement de matériau peut être réalisé par la pièce de jonction d'aide au soudage dans le matériau du premier composant (20).

2. Pièce de jonction d'aide au soudage (10) destiné à être posée dans au moins un premier composant (20) constitué d'un matériau difficilement soudable en combinaison avec une matrice (50) et servant au soudage consécutif avec au moins un deuxième composant (30) constitué d'un matériau soudable, la pièce de jonction d'aide au soudage (10) présentant les caractéristiques suivantes :

    a. une tête (16) et
    b. une pointe arrondie (11), laquelle est conçue en forme d'arc de cercle autour d'un point sur un axe longitudinal de la pièce de jonction d'aide au soudage, la pointe arrondie (11) présentant un rayon de pointe $SR_2$ dans la plage de 1,0 mm $\le SR_2 \le$ 2,5 mm, de sorte qu'un comportement de refoulement de matériau peut être réalisé par la pièce de jonction d'aide au soudage dans le matériau du premier composant (20).

3. Pièce de jonction d'aide au soudage (10) selon l'une des revendications précédentes, laquelle présente une région tronconique (13) disposée entre la pointe arrondie (11) et la tête (16) et s'élargit vers la tête.

4. Pièce de jonction d'aide au soudage (10) selon l'une des revendications précédentes, laquelle présente une tige (14), dans laquelle une surface extérieure de la pointe arrondie se prolonge dans une surface d'enveloppe de la tige ou dans la région tronconique (13).

**5.** Pièce de jonction d'aide au soudage (10) selon la revendication 4, dont la région tronconique (13) présente un angle de pointe SW entre un axe médian et une surface d'enveloppe conique dans la plage de 35° ≤ SW ≤ 80°.

**6.** Matrice (50) pour la pose d'une pièce de jonction d'aide au soudage (10) selon l'une des revendications précédentes, présentant les caractéristiques suivantes :

   a. une cavité concave (52), dont la paroi intérieure est conçue en forme d'arc de cercle, du moins dans une région partielle, de préférence en continu, avec un rayon de matrice MR dans la plage de 1 mm ≤ MR ≤ 8.

**7.** Matrice (50) selon la revendication 6, dans laquelle

   a. le rayon de matrice MR présente une origine en un point sur un axe médian de la cavité concave (52) avec une cavité en forme d'arc de cercle continue ou dans laquelle
   b. le rayon de matrice présente une origine en un point sur

      b1. l'axe médian ou sur
      b2. au moins une droite (G) s'étendant parallèlement à l'axe médian de la cavité concave,

   par rapport à l'au moins une région partielle.

**8.** Matrice (50) selon la revendication 6, dont la cavité concave (52) présente le rayon de matrice MR dans la plage de 1 mm ≤ MR ≤ 8 mm, dans laquelle la cavité concave s'ouvre sur une région convexe circonférentielle.

**9.** Matrice (50) selon la revendication 8, dans laquelle la région convexe est conçue en forme d'arc de cercle et présente un rayon extérieur MR$_a$ dans la plage de 10 mm ≤ MR$_a$ ≤ 50 mm.

**10.** Matrice (50) pour la pose d'une pièce de jonction d'aide au soudage (10) selon l'une des revendications 1 à 5, présentant les caractéristiques suivantes :

   a. une cavité concave (52), dont la paroi intérieure est conçue en forme d'arc de cercle, du moins dans une région partielle, avec un rayon de matrice MR dans la plage de 1 mm ≤ MR ≤ 60 mm ou de 10 mm ≤ MR ≤ 60 mm, dans laquelle
   b. la cavité concave (52) présente un fond de matrice (58) en son centre, lequel est plat, ondulé ou angulaire et prolonge la région partielle en forme d'arc de cercle.

**11.** Matrice (50) selon la revendication 10, dans laquelle le rayon de matrice présente une origine en un point sur

   a1. l'axe médian ou
   a2. au moins une droite (G) s'étendant parallèlement à l'axe médian de la cavité concave (52),

   par rapport à l'au moins une région partielle.

**12.** Matrice (50) pour la pose d'une pièce de jonction d'aide au soudage (10) selon l'une des revendications 1 à 5, présentant les caractéristiques suivantes :

   a. une cavité concave (52), dont la paroi intérieure est conçue en forme d'arc de cercle, du moins dans une région partielle, avec un rayon de matrice MR dans la plage de 1 mm ≤ MR ≤ 60 mm ou de 10 mm ≤ MR ≤ 60 mm, dans laquelle
   b. le rayon de matrice présente une origine en un point sur au moins une droite (G) s'étendant parallèlement à l'axe médian de la cavité concave, par rapport à l'au moins une région partielle.

**13.** Procédé d'assemblage pour une pièce de jonction d'aide au soudage (10) comprenant une tête (16) et une pointe arrondie (11), en particulier une pièce de jonction d'aide au soudage selon l'une des revendications 1 à 5, destinée à être posée dans au moins un premier composant (20) avec une matrice (50) en tant que contre-palier, laquelle présente une cavité concave (52) présentant une paroi intérieure en forme d'arc de cercle, du moins dans une région partielle, avec un rayon de matrice MR dans la plage de 1,0 mm ≤ MR ≤ 60 mm, pour la préparation d'un procédé de soudage consécutif, le procédé d'assemblage comportant les étapes suivantes :

- pose de la pièce de jonction d'aide au soudage (10) dans l'au moins un premier composant (20) constitué d'un matériau difficilement soudable et contre la matrice (50),

dans lequel une fente de refoulement de matériau est prévue entre une géométrie de pointe de la pièce de jonction d'aide au soudage et une géométrie de matrice, lorsque les conditions suivantes sont remplies :

$$0{,}001 \leq \frac{SR}{MR} \leq 0{,}1 \text{ en particulier } 0{,}002 \leq \frac{SR}{MR} \leq 0{,}08$$

où SR désigne un rayon de pointe de la pointe arrondie de la pièce de jonction d'aide au soudage.

14. Procédé d'assemblage selon la revendication 13, dans lequel le rayon de pointe SR et le rayon de matrice MR présentent le rapport suivant : $MR \geq 2 \cdot SR$ et/ou dans lequel le rayon de matrice MR est sélectionné dans la plage de $20 \text{ mm} \leq MR \leq 40 \text{ mm}$ et le rayon de pointe SR dans la plage de $0{,}1 \text{ mm} \leq SR \leq 1{,}5 \text{ mm}$.

15. Procédé d'assemblage selon l'une des revendications 13 à 14, dans lequel la pièce de jonction d'aide au soudage présente une région tronconique (13) disposée entre la pointe arrondie (11) et la tête (16), laquelle s'élargit vers la tête et présente un angle de pointe SW dans la plage de $35° \leq SW \leq 80°$ entre un axe médian de la région tronconique et une surface d'enveloppe.

16. Procédé d'assemblage pour une pièce de jonction d'aide au soudage (10) comprenant une tête (16) et une pointe arrondie (11), en particulier une pièce de jonction d'aide au soudage selon l'une des revendications 1 à 5, destinée à être posée dans au moins un premier composant (20) constitué d'un matériau difficilement soudable avec une matrice (50) en tant que contre-palier, laquelle présente une cavité concave (52) présentant une paroi intérieure en forme d'arc de cercle, du moins dans une région partielle, avec un rayon de matrice MR dans la plage de $1{,}0 \text{ mm} \leq MR \leq 60 \text{ mm}$, pour la préparation d'un procédé de soudage consécutif, le procédé d'assemblage comportant les étapes suivantes :

- pose de la pièce de jonction d'aide au soudage (10) dans l'au moins un premier composant (20) et contre la matrice (50),

dans lequel une fente de refoulement de matériau est prévue entre une géométrie de pointe de la pièce de jonction d'aide au soudage et une géométrie de matrice, lorsque les conditions suivantes sont remplies :

$$0{,}01 \leq \frac{SR}{MR} \leq 1 \text{ en particulier } 0{,}1 \leq \frac{SR}{MR} \leq 0{,}6$$

où SR désigne un rayon de pointe de la pointe arrondie de la pièce de jonction d'aide au soudage.

17. Procédé d'assemblage selon la revendication 16, dans lequel la matrice (50) présente une cavité concave (52) avec le rayon de matrice MR dans la plage de $1{,}5 \text{ mm} \leq MR \leq 5 \text{ mm}$, dans lequel la cavité en forme d'arc de cercle avec une paroi intérieure en forme d'arc de cercle, du moins dans une région partielle, s'ouvre sur une région convexe circonférentielle, en particulier avec un rayon de matrice extérieur dans la plage de $15 \text{ mm} \leq MR_a \leq 40 \text{ mm}$.

18. Procédé d'assemblage selon la revendication 16 ou 17, dans lequel le rayon de pointe SR et le rayon de matrice MR présentent le rapport suivant : $MR \geq 2 \cdot SR$ et/ou dans lequel le rayon de matrice MR comporte la plage de $1{,}5 \text{ mm} \leq MR \leq 5 \text{ mm}$ et le rayon de pointe SR une plage de $0{,}1 \text{ mm} \leq SR \leq 1{,}5 \text{ mm}$.

19. Procédé d'assemblage selon l'une des revendications 16 à 18, dans lequel la pièce de jonction d'aide au soudage (10) présente une région tronconique (13) disposée entre la pointe arrondie (11) et la tête (16), laquelle s'élargit vers la tête et présente un angle de pointe SW dans la plage de $35° \leq SW \leq 80°$ entre un axe médian de la région tronconique et une surface d'enveloppe.

20. Procédé d'assemblage pour une pièce de jonction d'aide au soudage (10) comprenant une tête (16) et une pointe arrondie (11), en particulier une pièce de jonction d'aide au soudage (10) selon l'une des revendications 1 à 5, destinée à être posée dans au moins un premier composant (20) constitué d'un matériau difficilement soudable avec une matrice (50) en tant que contre-palier, laquelle présente une cavité concave (52) présentant une paroi intérieure en forme d'arc de cercle, du moins dans une région partielle, avec un rayon de matrice MR dans la plage de 1,0 mm $\leq$ MR $\leq$ 60 mm, pour la préparation d'un procédé de soudage consécutif, le procédé d'assemblage comportant les étapes suivantes :

- pose de la pièce de jonction d'aide au soudage (10) dans l'au moins un premier composant (20) et contre la matrice (50),

dans lequel une fente de refoulement de matériau est prévue entre une géométrie de pointe de la pièce de jonction d'aide au soudage et une géométrie de matrice, lorsque les conditions suivantes sont remplies :

$$0{,}01 \leq \frac{SR}{MR} \leq 0{,}5 \ \text{en particulier} \ 0{,}03 \leq \frac{SR}{MR} \leq 0{,}3$$

où SR désigne un rayon de pointe de la pointe arrondie de la pièce de jonction d'aide au soudage.

21. Procédé d'assemblage selon la revendication 20, dans lequel le rayon de pointe SR et le rayon de matrice MR présentent le rapport suivant : MR $\geq$ 2 • SR et/ou dans lequel le rayon de matrice MR comporte la plage de 20 mm $\leq$ MR $\leq$ 40 mm et le rayon de pointe SR la plage de 1 mm $\leq$ SR $\leq$ 1,5 mm.

22. Procédé d'assemblage pour une pièce de jonction d'aide au soudage (10) comprenant une tête (16) et une pointe (11), destinée à être posée dans au moins un premier composant (20) constitué d'un matériau difficilement soudable avec une matrice (50) en tant que contre-palier, laquelle présente une cavité (52) avec un angle de matrice MW entre un axe médian de la cavité et une paroi intérieure de la cavité, pour la préparation d'un procédé de soudage consécutif, le procédé d'assemblage comportant les étapes suivantes :

- pose de la pièce de jonction d'aide au soudage dans l'au moins un premier composant (20) et contre la matrice (50), dans lequel une fente de refoulement de matériau est prévue entre la pièce de jonction d'aide au soudage et la matrice, lorsque les conditions suivantes sont remplies :

$$0{,}4 \leq \frac{SW_1}{MW} \leq 1{,}0 \ \text{en particulier} \ 0{,}6 \leq \frac{SW}{MW_1} \leq 0{,}8$$

où SW désigne un angle de pointe de la pointe de la pièce de jonction d'aide au soudage, mesuré entre l'axe médian et le côté extérieur de la pièce de jonction d'aide au soudage.

23. Procédé d'assemblage selon la revendication 22, dans lequel la matrice (50) présente une cavité angulaire (52') avec l'angle de matrice MW dans la plage de 70° $\leq$ MW $\leq$ 90° et/ou dans lequel l'angle de pointe SW et l'angle de matrice MW présentent le rapport suivant : MW - SW $\geq$ 10°.

24. Procédé d'assemblage selon l'une des revendications 22 à 23, dans lequel l'angle de pointe SW comporte une plage de 35° $\leq$ SW $\leq$ 80°.

25. Procédé d'assemblage selon l'une des revendications 22 à 24, dans lequel la pièce de jonction d'aide au soudage (10) présente une région tronconique (13) disposée entre la pointe (11) et la tête (16) et s'élargissant vers la tête, et la région tronconique présente l'angle de pointe SW entre l'axe médian et une surface d'enveloppe conique.

26. Procédé d'assemblage selon l'une des revendications précédentes 13 à 25, comprenant l'étape suivante :

- soudage du premier composant (20) à l'aide de la pièce de jonction d'aide au soudage (10) avec un deuxième composant (30) constitué d'un matériau soudable.

27. Procédé d'assemblage selon l'une des revendications 13 à 26, dans lequel, lors de la pose, la pièce de jonction d'aide au soudage (10) est accélérée à une vitesse dans la plage de 1 m/s $\leq$ v $\leq$ 40 m/s, de préférence de 1 m/s à 5 m/s inclus ou de 10 m/s $\leq$ v $\leq$ 40 m/s.

**FIG. 1  Stand der Technik**

a)    b)    c)    d)    e)

**FIG. 2**

50

56    52                                    56        52

**FIG. 3**

**FIG. 4**

M

10

12

13

SW

11'

MW

54'

52'

50'

S

**FIG. 5**

**FIG. 6**

M

10

14

SW₂

SR₂

12

13

11

MR₂

52

MR_a

50

**FIG. 7**

M

14

SW₃

SR₃

12

13

11

MR₃

52

50

S

**FIG. 8**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010020569
- DE 10015713 A1
- DE 10060390 A1
- DE 102004025492
- DE 102007036416
- DE 102012018866
- DE 102012010870
- DE 1099663 B
- DE 102010013089 A1
- WO 2011141039 A1
- JP 2008080394 A
- JP H09150815 B
- US 2008081499 A1
- WO 2012095103 A
- EP 2606993 A1
- EP 1078701 A2
- EP 2631022 A1
- DE 102006002238